Europäisches Patentamt

European Patent Office

Office européen des brevets

(19)

(11) **EP 0 451 865 B1**

(12) **EUROPEAN PATENT SPECIFICATION**

(45) Date of publication and mention
of the grant of the patent:
**26.06.1996  Bulletin 1996/26**

(51) Int Cl.6: **G03B 29/00**, G03B 21/00,
G03B 3/00

(21) Application number: **91105875.8**

(22) Date of filing: **12.04.1991**

(54) **Automatic focusing apparatus with optimal focusing position calculation method**

Automatisches Fokussiergerät mit Verfahren zur optimalen Berechnung der Fokussierposition

Appareil automatique de mise au point avec procédé pour le calcul optimal de position de focalisation

(84) Designated Contracting States:
**DE FR GB**

(30) Priority: **12.04.1990  JP  97233/90**
**12.04.1990  JP  97234/90**
**27.04.1990  JP  110638/90**

(43) Date of publication of application:
**16.10.1991   Bulletin 1991/42**

(73) Proprietor: **OLYMPUS OPTICAL CO., LTD.**
**Tokyo 151 (JP)**

(72) Inventors:
• **Yamana, Motokazu**
**Hachioji-shi, Tokyo (JP)**
• **Nagasawa, Nobuyuki**
**Hachioji-shi, Tokyo (JP)**
• **Takahama, Yasuteru**
**Hachioji-shi, Tokyo (JP)**

(74) Representative: **KUHNEN, WACKER & PARTNER**
**Alois-Steinecker-Strasse 22**
**85354 Freising (DE)**

(56) References cited:
**EP-A- 0 378 832          US-A- 4 389 092**
**US-A- 4 470 683          US-A- 4 810 869**
**US-A- 4 849 782          US-A- 4 906 099**

• **PATENT ABSTRACTS OF JAPAN, unexamined**
**applications, P section, vol. 10, no. 341,**
**November 18, 1986 THE PATENT OFFICE**
**JAPANESE GOVERNMENT page 58 P 517**
• **PATENT ABSTRACTS OF JAPAN, unexamined**
**applications, E section, vol. 11, no. 212, July 9,**
**1987 THE PATENT OFFICE JAPANESE**
**GOVERNMENT page 50 E 522**

## Description

The present invention relates to a focusing position detecting and automatic focusing apparatus and, more particularly, to a focusing position detecting apparatus used for focus adjustment of an optical device such as a camera or a microscope, a focusing position detecting apparatus for receiving sample image light from a microscope or the like by means of an image sensor and detecting a focusing position on the basis of a resulting scanning signal, and an automatic focusing apparatus for an optical device, e.g., a microscope, which can be used in combination with these focusing position detecting apparatuses.

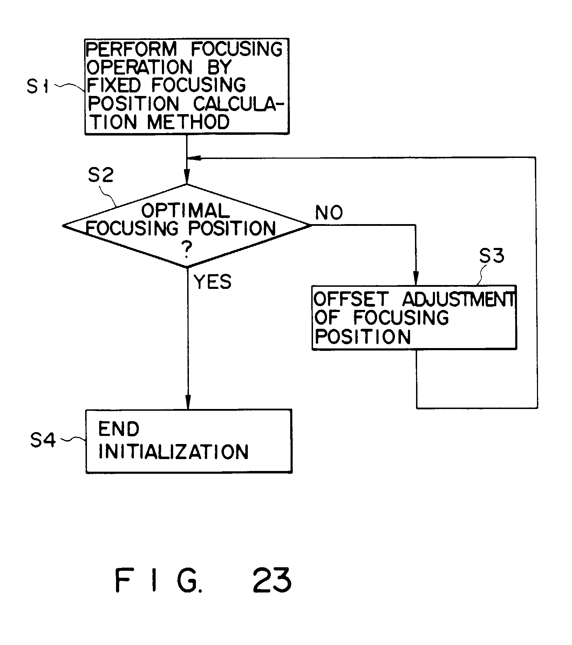

As a conventional automatic focusing apparatus for a microscope or the like, an apparatus disclosed in, e. g., Published Unexamined Japanese Patent Application No. 61-143710 is known. In this automatic focusing apparatus, a focusing position calculation method is basically fixed one kind of focusing position calculation method. In this automatic focusing apparatus, initialization is performed in accordance with the flow chart shown in Fig. 23. Firstly, a focusing operation is performed while the focusing position calculation method for normally used samples is fixed, thus positioning an objective optical system and a target object to set a proper distance therebetween by an automatic focusing function (step S1). In step S2, it is checked whether the focusing position of the positioned target object is optimal. If it is not the optimal focusing position for a user, offset adjustment is performed with respect to the focusing position set by the automatic focusing function (step S3). With this operation, the focusing position set by the automatic focusing function is optimised, thus completing the initialization (step S4).

Another conventional automatic focusing apparatus is disclosed in Published Examined Japanese Patent Application No. 62-32761. In this apparatus, a high-frequency component is extracted from the spatial frequency components of a target object image formed by a phase contrast optical system. Subsequently, a focusing position is obtained on the basis of the relative distance between the phase contrast optical system and the target object at which the high-frequency component of the spatial frequency components exhibits the maximum value when the high-frequency component has the second peak within a predetermined distance range from this relative distance.

In the automatic focusing apparatus disclosed in Published Unexamined Japanese Patent Application No. 61-143710, however, since a focusing position calculation method applicable for normally used samples is fixed, a focusing position set by this method becomes unstable, if, for example, a special sample is to be focused. Therefore, a focusing operation with high reproducibility cannot be expected.

Furthermore, in the automatic focusing apparatus disclosed in Published Examined Japanese Patent Application No. 62-32761, since a focusing position is solely determined on the basis of the relative distance between the optical system and the target object at which the high-frequency component of the spatial frequency components exhibits the maximum value, it cannot reflect a subtle difference in optimal focusing position between users.

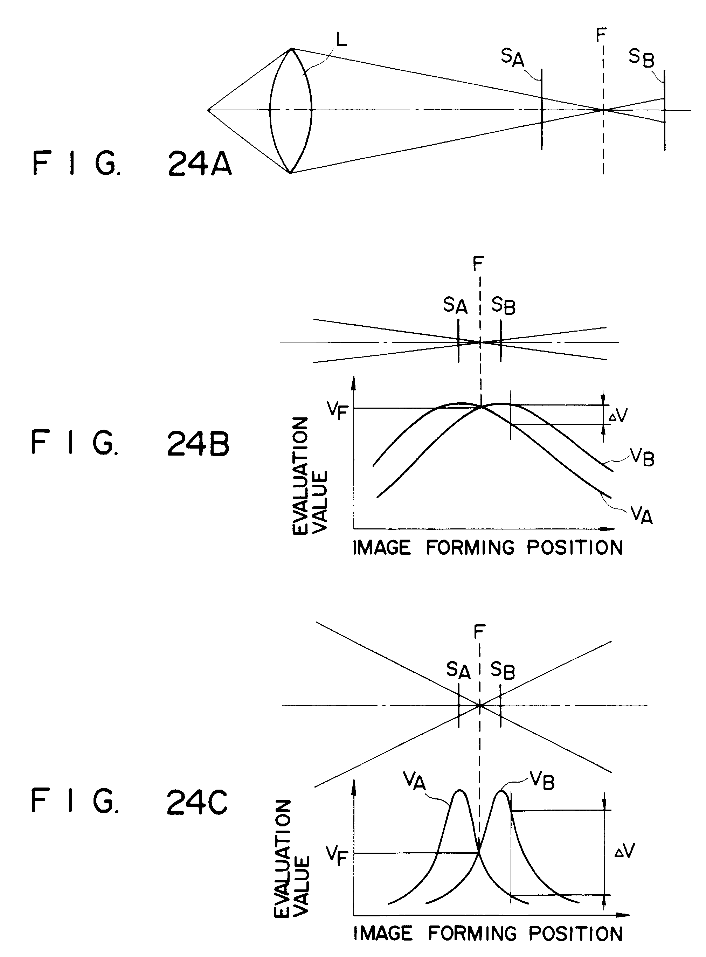

As a conventional focusing position detecting optical system, an optical system having the arrangement shown in Fig. 24A is known. Light-receiving element arrays $S_A$ and $S_B$ are arranged before and behind a focal plane F, of an optical system L for forming an object image, in the direction of the optical axis of the optical system L, at the same distance from the focal plane F while the respective element arrays are perpendicular to the optical axis. Output signals from these light-receiving element arrays $S_A$ and $S_B$ are converted into evaluation values by predetermined evaluation functions, and a focusing position is detected on the basis of the evaluation values.

Figs. 24B and 24C respectively show relationships between evaluation values and image forming positions at different magnifications. As shown in Figs. 24B and 24C, a focusing position is the position where a difference $\Delta V$ between an evaluation value $V_A$ of an output signal from the light-receiving element array $S_A$ and an evaluation value $V_B$ of an output signal from the light-receiving element array $S_B$ becomes 0. In the conventional apparatus, therefore, a focusing state is detected on the basis of the comparison between the evaluation values $V_A$ and $V_B$ in the following manner. If $V_A > V_B$, a forward-focus state is detected. If $V_A < V_B$, a backward-focus state is detected. If $V_A = V_B$, an in-focus e.g., just focusing state is detected.

In the above-described focus detection, however, since the N.A. on the image side is greatly changed when the magnification of the optical system L is changed, the difference $\Delta V$ between the evaluation values $V_A$ and $V_B$ corresponding to the light-receiving element arrays $S_A$ and $S_B$ is decreased depending on the magnification of the optical system L. For this reason, it is sometimes difficult to determine a near-focus state or a far-focus state. Furthermore, an evaluation value $V_F$ at the focal plane F may be reduced to make determination of an in-focus state difficult.

If, for example, the distances between the focal plane F and the pair of light-receiving element arrays $S_A$ and $S_B$ are set in accordance with a low magnification of an optical system as shown in Fig. 24C, when the magnification of the optical system is increased, the N. A. on the image side is greatly increased as compared with the case of the low magnification, thus increasing the depth of focus on the image side, as shown in Fig. 24B. As a result, the difference $\Delta V$ between the evaluation values $V_A$ and $V_B$ is reduced to make determination of a defocus direction difficult.

In contrast to this, assume that the distances between the focal plane F and the light-receiving element arrays $S_A$ and $S_B$ are set in accordance with a high magnification of the optical system. In this case, when the magnification of the optical system is changed to a low magnification, the N.A. on the image side is increased as compared with the case of a high magnification, thus decreasing the depth of focus on the image side. As a result, the evaluation value at the focal plane F becomes a small value. Moreover, a region (dead zone) where $\Delta V = 0$ continuously appears is generated near the focal plane F. For these reasons, determination of an in-focus state cannot be performed.

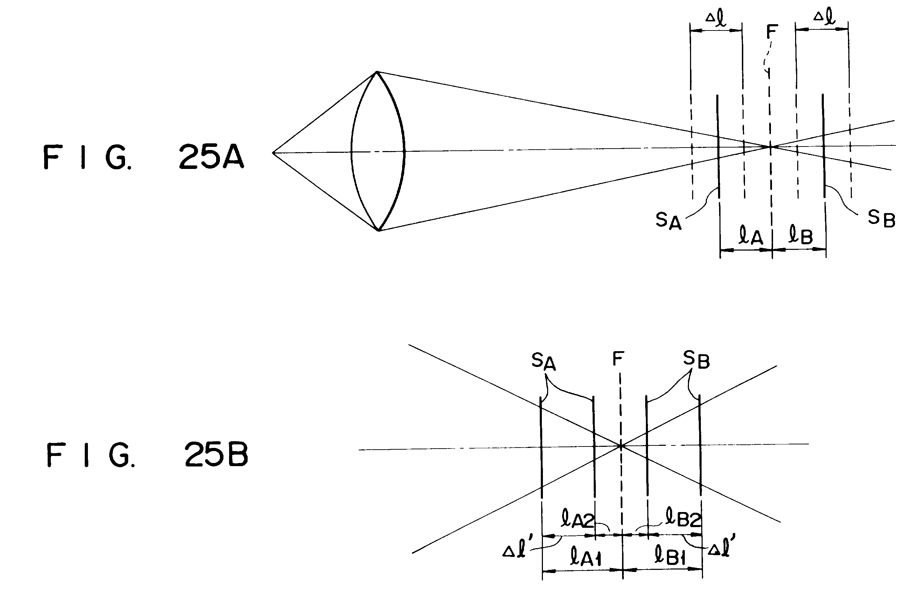

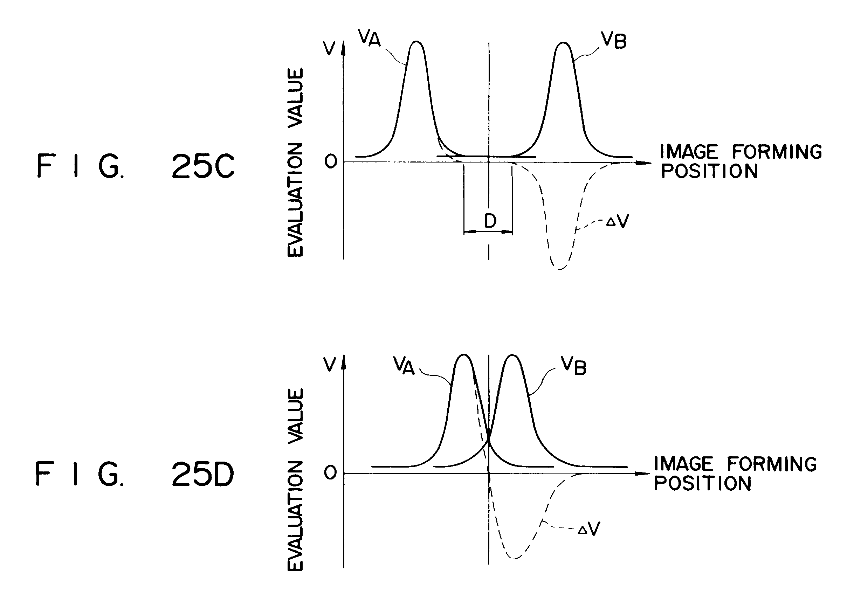

In a conventional apparatus, therefore, distances $\ell A$ and $\ell B$ between the focal plane F and the light-receiving element arrays $S_A$ and $S_B$ are changed within a range of $\Delta \ell$ in accordance with switching of magnifications of the optical system L, as shown in Fig. 25A. More specifically, if the distances between the focal plane F and the light-receiving element arrays $S_A$ and $S_B$ are set to be $\ell A_1$ and $\ell B_1$ when the magnification of the optical system is low, as shown in Fig. 25B, the evaluation values $V_A$ and $V_B$ calculated from output signals from the light-receiving element arrays $S_A$ and $S_B$ exhibit a dead zone, in which $\Delta V = 0$ continuously appears, near the focal plane F, as shown in Fig. 25C. For this reason, the distances between the focal plane F and the light-receiving elements $S_A$ and $S_B$ are changed by $\Delta \ell$ to be $\ell A_2$ and $\ell B_2$. With this operation, the evaluation values $V_A$ and $V_B$ shown in Fig. 25D are obtained, and hence the difference $\Delta V$ is increased to a value enough to detect a focusing position.

In the technique shown in Figs. 25A to 25D, however, since the optical path lengths between the focal plane F and the light-receiving element arrays $S_A$ and $S_B$ are changed, driving units for moving the light-receiving element arrays $S_A$ and $S_B$ along the optical axis are required, and the optical path lengths must be adjusted to optimal optical path lengths in accordance with the magnification of the optical system. Therefore, the apparatus requires complicated control and arrangement.

In addition, video information obtained by the light-receiving element arrays at a specific magnification of the optical system is limited to that having a specific difference in optical path length. This deteriorates the focusing precision of the apparatus.

According to another conventional focusing position detecting apparatus, a line image sensor is arranged near the focal plane of an image forming optical system. In this apparatus, a scanning signal of an image projected on the line image sensor is input to an arithmetic unit, and an optical lens system is controlled by executing an arithmetic operation on the basis of image information, such as the contrast of the image, included in the scanning signal obtained by line scanning, thereby obtaining an optimal focusing result.

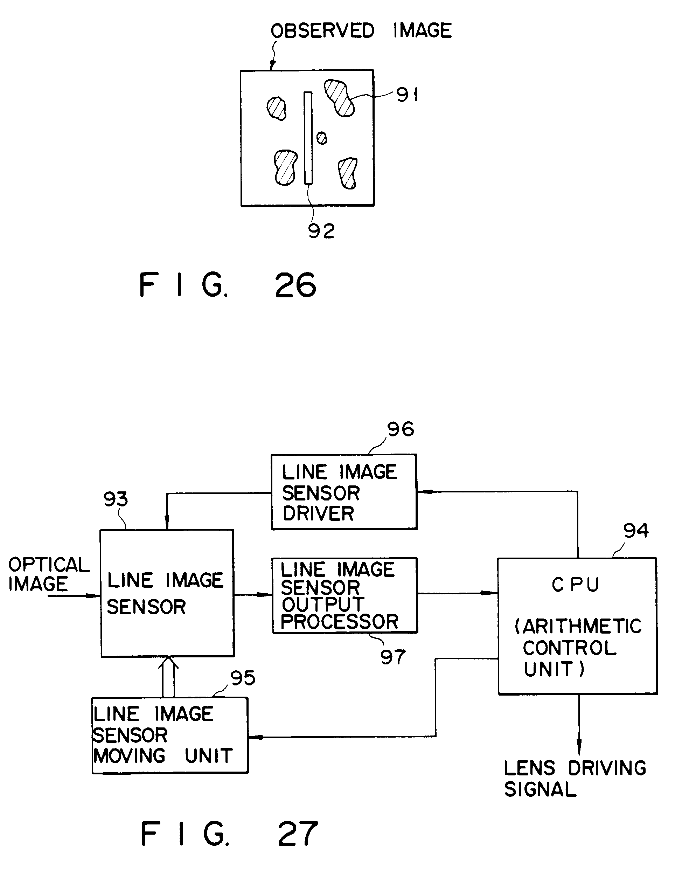

Samples as observed images, however, vary widely in shape and distribution. For example, as shown in Fig. 26, the components of a sample 91 may be scattered in an image, so that a pixel array of the line image sensor (scanning line) cannot cover the image of the sample 91. In such a case, since a scanning signal output from the line image sensor includes no image information of the sample on which the optical system is to be focused, a focusing position cannot be detected.

In order to solve such a problem, the following technique has been proposed. The image surface of an image (to be read by the line image sensor) formed by the image forming optical system is scanned from a read start position to a read end position to read the image. The read image is then converted into a new image. Thereafter, the line image sensor is moved from the read end position to the read start position. In the process of this movement, the line image sensor is stopped at a position where image information is present. By using a scanning signal at this time, a focusing position detected. This technique is disclosed in, e.g., Published Examined Japanese Patent Application No. 63-37363.

The focusing position detecting apparatus in the above publication has the arrangement shown in Fig. 27. A line image sensor 93 is moved to a movement start position by a line image sensor moving unit 95 in response to a command from an arithmetic control unit (CPU) 94. Under the control of the CPU 94, the line image sensor 93 is driven by a line image sensor driver 96, and a scanning signal output from the line image sensor 93 is input to a line image sensor output processor 97 to be converted into a digital signal. The digital signal is then fetched by the CPU 94. The CPU 94 performs arithmetic processing for the scanning signal data to determine the presence/absence of information required for a focusing position detection operation. The above-described operation is repeated until information required for a focusing position detecting operation is obtained, i.e., until the scanning line is located at a position where a sample is present. In the apparatus shown in Fig. 27, the line image sensor 93 is moved to the optimal position for a focusing position detecting operation, and a scanning signal of an image is fetched by the CPU 94 in this manner to control an optical lens system (not shown), thereby detecting a focusing position.

In the focusing position detecting apparatus shown in Fig. 27, however, since the line image sensor moving unit 95 is required to move the line image sensor 93, the apparatus is undesirably increased in size.

Furthermore, in the apparatus shown in Fig. 27, since arithmetic processing of linear image information must be repeatedly performed by moving the line image sensor 93, it takes much time to detect a focusing position.

It is, therefore, an object of the present invention to provide a new and improved automatic focusing apparatus which has a proper arrangement to always allow stable, high-precision positioning with respect to an optimal focusing position intended by a user with excellent reproducibility.

According to the present invention, an automatic focusing apparatus in accordance with claim 1 is provided.

This invention can be more fully understood from the following detailed description when taken in conjunction with the accompanying drawings, in which:

Fig. 1 is a block diagram showing a schematic arrangement of an automatic focusing apparatus according to the first embodiment of the present invention;

Fig. 2 is a flow chart for explaining an operation of the apparatus in Fig. 1;

Fig. 3 is a block diagram showing a practical example of the automatic focusing apparatus according to the first embodiment of the present invention;

Figs. 4 and 5 are graphs for explaining an operation of the apparatus in Fig. 3;

Fig. 6 is a block diagram showing another practical example of the automatic focusing apparatus according to the first embodiment of the present invention;

Figs. 7 and 8 are graphs for explaining an operation of the apparatus in Fig. 6;

Fig. 9 is a block diagram showing still another practical example of the automatic focusing apparatus according to the first embodiment of the present invention;

Figs. 10 and 11 are graphs for explaining different applications of the first embodiment of the present invention;

Figs. 12A and 12B are views for explaining a principle of a focusing position detecting apparatus according to the second embodiment of the present invention;

Fig. 13 is a block diagram showing a practical example of the focusing position detecting apparatus according to the second embodiment of the present invention;

Figs. 14A and 14B are views showing an arrangement of two-dimensional CCD arrays used for the apparatus in Fig. 13;

Fig. 15A is a view showing optical path lengths from the focal plane to the respective light reception regions in the two-dimensional CCD arrays in Fig. 13;

Figs. 15B and 15C are graphs for explaining an operation of the apparatus in Fig. 13;

Figs. 16A and 16B are graphs for explaining an operation, in another form, of the second embodiment of the present invention;

Fig. 17 is a view showing a detailed arrangement of a focusing position detecting apparatus according to the third embodiment of the present invention;

Fig. 18 is a view showing a plan view of a sample image and its compressed image;

Fig. 19 is a view showing a modification of a compressed image forming optical system used for the apparatus in Fig. 17;

Fig. 20 is a block diagram showing an arrangement of part of another practical example of the third embodiment of the present invention;

Fig. 21 is a plan view of a sample image used for the apparatus in Fig. 20 and having contrast expressed by a pattern;

Fig. 22 is a flow chart for explaining an operation of the apparatus in Fig. 20;

Fig. 23 is a flow chart for explaining a conventional automatic focusing technique;

Figs. 24A, 24B, and 24C and 25A, 25B, 25C, and 25D are views for explaining a conventional focusing position detecting technique;

Fig. 26 is a view showing a relationship between a sample image and a scanning region in a conventional technique; and

Fig. 27 is a block diagram showing a schematic arrangement of a conventional focusing position detecting apparatus.

Reference will now be made in detail to the presently preferred embodiments of the invention as illustrated in the accompanying drawings, in which like reference characters designate like or corresponding parts throughout the several drawings.

An automatic focusing apparatus according to the first embodiment of the present invention will be described with reference to the accompanying drawings.

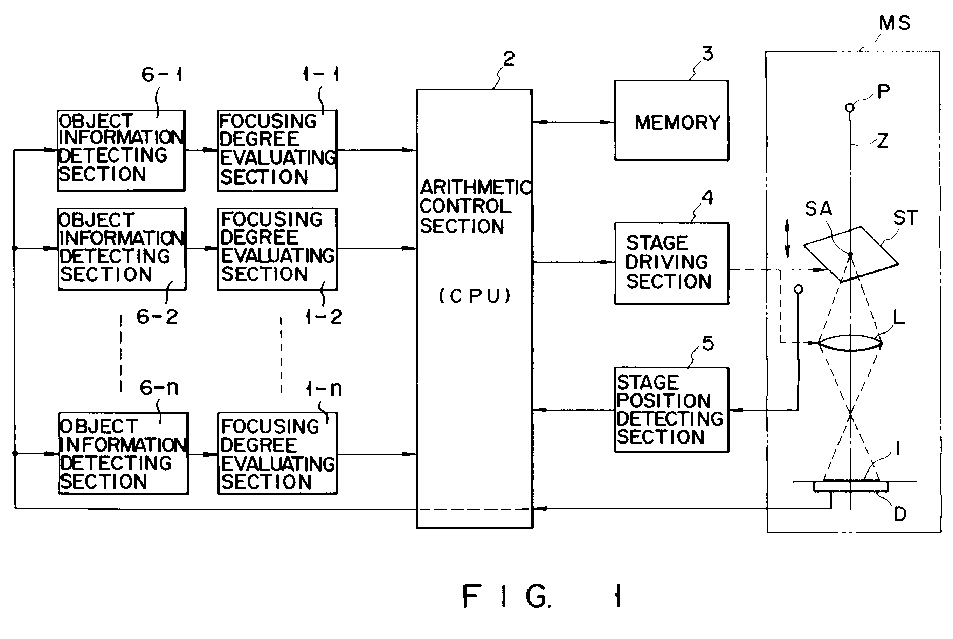

Fig. 1 shows a schematic arrangement of an automatic focusing apparatus according to the first embodiment of the present invention, which is applied to a general optical microscope MS designed to perform a focusing operation by moving a stage ST in the direction of the optical axis Z direction of an objective optical system L. This automatic focusing apparatus comprises a plurality of focusing degree evaluating sections 1-1 to 1-n for respectively calculating focusing degrees by different focusing position calculation methods, a control section (CPU) 2 for controlling operations of the overall automatic focusing apparatus, a memory 3 for storing operation programs and various types of data required for the respective components, a stage driving section 4 for driving the stage ST, on which a sample SA as an object is mounted, in the Z direction, and a stage position detecting section 5 for detecting the position of the stage ST in the Z direction. Referring to Fig. 1, reference symbol P denotes a light source; I, a microscopic image; and D, an image input section such as a CCD. Reference numerals 6-1 to 6-n denote object information detecting section for providing information of the object obtained by the optical microscope MS to the focusing degree evaluating sections 1-1 to 1-n.

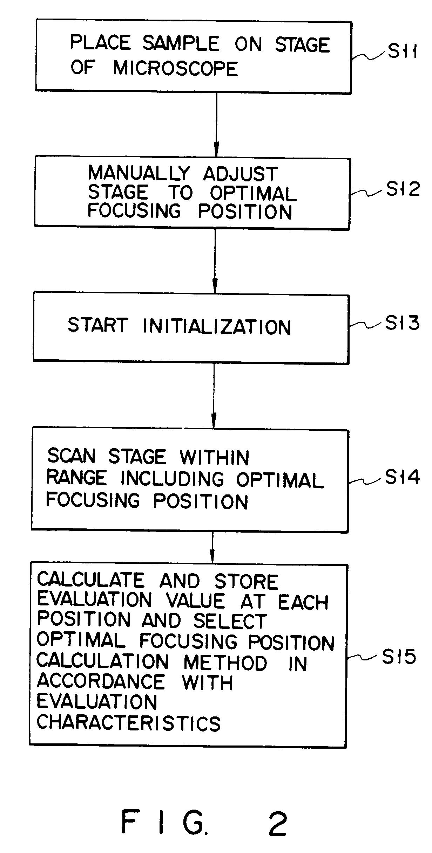

As shown in the flow chart shown in Fig. 2, in this apparatus, a user places the sample SA on the stage ST (step S11), and the stage ST is manually adjusted to an optimal focusing position for the user (step S12). Subsequently, initialization of the automatic focusing apparatus is started (step S13). In this initialisation, the stage ST is scanned in the Z direction by the stage driving section 4 within a predetermined ranged in the Z direction, which includes the optimal focusing position set by the user (step S14). Within this scan range, evaluation values are respectively obtained by the focusing degree evaluating sections 1-1 to 1-n in accordance with position data from the stage position detecting section 5, and the obtained evaluation values are stored in the memory 3 (step S15). When scanning of the stage ST in the Z direction is completed, one of the focusing degree evaluating sections 1-1 to 1-n, which is based on a focusing position calculation method for obtaining an optimal focusing position, is selected on the basis of the evaluation values obtained by the focusing degree evaluating sections 1-1 to 1-n and stored in the memory 3, in accordance with a program stored in the memory 3. Subsequently, when the same type of sample is placed on the stage ST, the stage ST is automatically positioned to an optimal focusing position in relation to the objective optical system L by moving the stage ST in the Z direction on the basis of an evaluation value from a selected one of the focusing degree evaluating sections 1-1 to 1-n.

Note that evaluation values obtained by the focusing degree evaluating sections 1-1 to 1-n at the respective positions in the scan range of the stage ST in the Z direction may be obtained by scanning the stage ST in the Z direction and performing an arithmetic operation based on information of the object from the object information detecting section 6-1 to 6-n, at each position in the scan range, or may be obtained by storing the information at each position in the scan range and performing an arithmetic operation on the basis of the stored information after the scanning operation.

As described above, the plurality of focusing degree evaluating sections 1-1 to 1-n based on the different focusing position calculation methods are arranged. In this arrangement, the stage ST is scanned in the Z direction within the predetermined range including the optimal focusing position to which the stage ST is manually adjusted by the user, thus obtaining evaluation values at the respective positions in the scan range. One of the focusing degree evaluating sections 1-1 to 1-n which is based on the focusing position calculation method for providing an optimal focusing position is selected on the basis of the evaluation values. With this operation, the stage ST can always be positioned stably to an optimal focusing position reflecting the intention of a user with high reproducibility and high precision. In addition, an automatic focusing operation can be performed with respect to an unknown sample by an optimal focusing position calculation method.

In this case, in order to facilitate understanding of the description, the focusing degree evaluating sections are independently arranged. However, focusing degree evaluation processing can be performed in the CPU on the basis of information from the image input section D in accordance with a program of a focusing position calculation method stored in the memory.

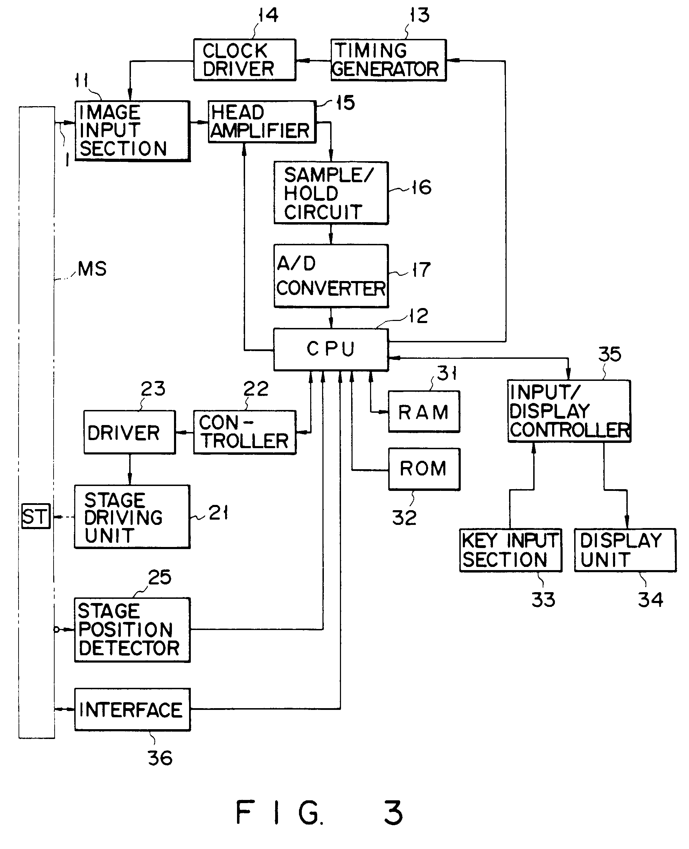

Fig. 3 is a block diagram showing a detailed arrangement of the first embodiment of the present invention. In this embodiment, the present invention is applied to the general optical microscope MS in Fig. 1. In this arrangement, a microscopic image I formed by the optical microscope MS is input to the apparatus, and a focusing state representing a focusing degree, i.e., a degree of near- or far-focus state, is detected by a known contrast method of evaluating the sharpness of the input image.

The microscopic image I is input to an image input section 11 to be converted into an image signal. The image input section 11 is constituted by a solid imaging element such as a CCD. The image input section 11 is driven by an arithmetic control section (CPU) 12 through a timing generator 13 and a clock driver 14. The image signal from the image input section 11 is fetched by the CPU 12 through a head amplifier 15, a sample/hold circuit 16, and an analog/digital (A/D) converter 17. Note that a storage time of the microscopic image I in the image input section 11 is controlled by the CPU 12 through the timing generator 13 and the clock driver 14. In addition, the gain of the head amplifier 15 is also controlled by the CPU 12.

In this case, as shown in Fig. 1, the stage ST, on which a sample is mounted, is moved in the direction of the optical axis (Z direction) of the objective optical system L to perform focusing adjustment. For this purpose, a stage driving unit 21 is arranged to drive the stage ST in the Z direction. The stage driving unit 21 is driven by the CPU 12 through a controller 22 and a driver 23. Note that the stage driving unit 21 is constituted by, e.g., a DC motor or a stepping motor.

In addition, a stage position detector 25 is arranged to detect the position of the stage ST in the Z direction, which is driven by the stage driving unit 21. An output from the detector 25 is supplied to the CPU 12. The stage position detector 25 is constituted by, e.g., an encoder.

An input/display controller 35 and an interface 36 are connected to the CPU 12. The controller 35 serves to control a RAM 31 for storing data, a ROM 32 for storing programs, a key input section 33, and a display unit 34. The interface 36 serves to access the optical microscope MS for information of the optical system, such as the type and magnification of an objective lens, and to transmit/receive other information to/from the microscope MS.

An operation of the apparatus having the arrangement shown in Fig. 3 will be described below.

Various types of samples are observed by an optical microscope. In practice, however, samples of the same type are very often observed. In this case, therefore, a standard focusing position calculation method used in observation of various types of samples, and a plurality of focusing position calculation methods, each for use in observation of samples of the same type, including the standard focusing position calculation method are stored in the ROM 32. In an observation mode for various types of samples, an automatic focusing operation is performed by the standard focusing position calculation method. In an observation mode for samples of the same type, an automatic focusing operation is performed by selecting an optimal focusing position calculation method for a corresponding sample from the plurality of focusing position calculation methods upon initialization to be described below.

In the observation mode of samples of the same type, a user selects one representative sample from samples to be observed by using the optical microscope MS, and places it on the stage ST. The user then manually adjusts the stage ST to a preferable focusing position and starts initialization by operating the key input section 33.

When initialization is started, the CPU 12 fetches stage position data associated with the focusing position, to which the stage ST is manually adjusted by the user, from the stage position detector 25. At the same time, the CPU 12 accesses the optical microscope MS to fetch objective data, such as the type and the like of a currently used objective lens, through the interface 36. The CPU 12 determines a scan range of the stage ST in the Z direction, which includes the focusing position to which the stage ST is adjusted by the user, on the basis of the fetched data. Subsequently, the CPU 12 determines the gain of the head amplifier 15 and a storage time of the microscopic image I in the image input section 11 on the basis of the image information input to the image input section 11 in the in-focus state currently adjusted by the user. The CPU 12 coarsely scans the stage ST within the scan range through the stage driving unit 21. On the basis of the level of the input image information, the CPU 12 checks whether the gain of the head amplifier 15 and the storage time of the image input section 11 set in this manner are proper. If it is determined that these settings are improper, they are corrected.

Upon completion of the above operation, the CPU 12 determines a step width in a scanning operation on the basis of the objective data from the optical microscope MS. While moving the stage ST in the scan range through the stage driving unit, the CPU 12 fetches image information corresponding to each step width in the scan range. Upon completion of fetching of image information at each step position, the CPU 12 obtains contrast evaluation values on the basis of the image information at the respective step positions by a plurality of different focusing position calculation methods stored in the ROM 32, and stores the contrast evaluation values obtained by the focusing position calculation methods in the RAM 31.

In this case, each contrast evaluation value is obtained by calculating moving averages on the basis of the obtained image information by using the following equations, and calculating a difference between the averages:

$$Y_1[n] = \frac{1}{L}\sum_{k=0}^{L-1}X1[n-K]$$

$$Y_2[n] = X_2[n] - X_2[n-L]$$

$$V_L = {}_{all}\sum_{pixels}|Y_2[n]|$$

For the sake of a simple description, equations of the first degree are used in this case. According to the above equations, L moving averages $Y_1$ of input image information $X_1$ are obtained, the differences of the averages are obtained according to the second equation while $X_2$ is substituted for $Y_1$, and $V_L$ representing the total sum of the absolute values of the differences is finally calculated.

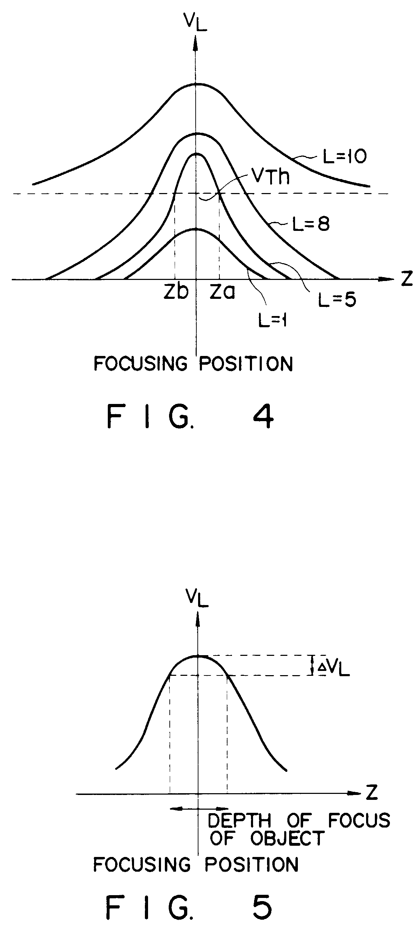

In this case, four types of focusing position calculation methods with L = 1, 5, 8, 10 are stored in the ROM 32 as different types of focusing position calculation methods. If contrast evaluation values are obtained by the respective focusing position calculation methods, evaluation value characteristics shown in, e.g., Fig. 4 are obtained.

Subsequently, focusing position calculation methods having peak values higher than a predetermined value $V_{th}$ (the focusing position calculation methods with L = 1, 5, 8, in Fig. 4) are selected on the basis of the evaluation value characteristics obtained by the respective focusing position calculation methods in accordance with a program stored in the ROM 32. Thereafter, one of the selected focusing position calculation methods, in which a change $\Delta V_L$ at a depth of focus $V_L$ of the objective lens becomes a maximum value, is selected, as shown in Fig. 5. In the case shown Fig. 4, the focusing position calculation method with L = 8 is selected as the optimal focusing position calculation method and is stored in the RAM 31. Subsequently, an automatic focusing operation is performed by using the optimal focusing position calculation method stored in the RAM 31.

As described above, in this case, the stage is scanned in the Z direction within a predetermined scan range including a focusing position to which the stage is manually adjusted by a user, evaluation values are obtained at the respective positions by different types of focusing position calculation methods, and a focusing position calculation method which provides an optimal focusing position is selected on the basis of these evaluation values. Therefore, a sample can always be positioned stably to an optimal focusing position reflecting the intention of the user with high precision. In an automatic focusing operation upon selection of the optimal focusing position calculation method, a high-speed operation can be performed by determining a scan range of the stage ST in the Z direction in consideration of a range where the evaluation value $V_L$ is higher than the predetermined value $V_{th}$ (Za to Zb in Fig. 4), and the influences of sample thickness errors and stage height errors.

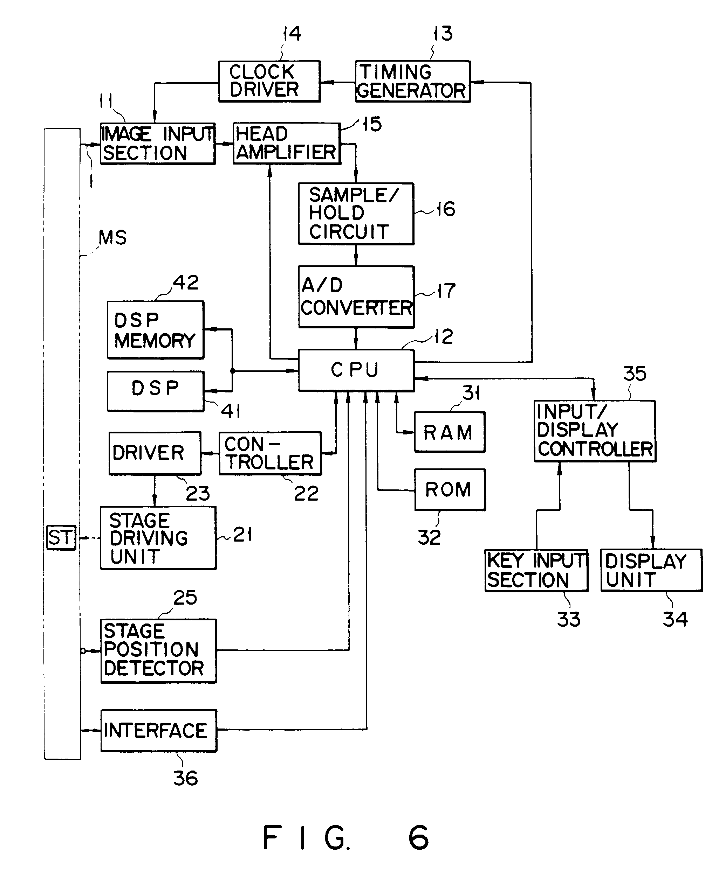

Fig. 6 shows a practical example of the first embodiment of the present invention. The arrangement of this example is the same as that shown in Fig. 3 except that a digital signal processor (DSP) 41 as a high-speed arithmetic unit and a memory 42 for the DSP 41 are added. With this arrangement, digital filter processing and fast Fourier transform (FFT) processing can be performed at high speed so as to detect an in-focus state by using the spatial frequency distribution of an image as a focusing position calculation method.

An operation of this example will be described below.

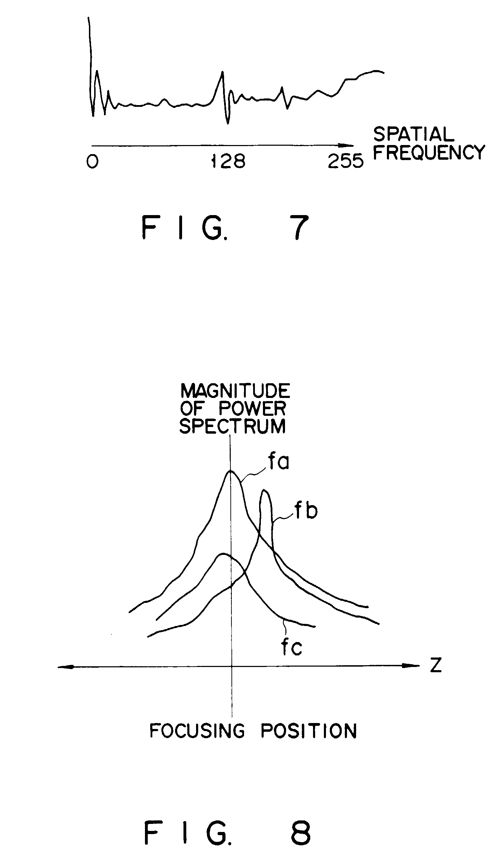

A CPU 12 determines a scan range of the stage ST in the same manner as described above with reference to Fig. 3. The CPU 12 then causes a stage driving unit 21 to move the stage ST in the scan range, and fetches image information at the respective positions. Thereafter, the CPU 12 causes the DSP 41 to perform FFT processing of the image information. If the image information one-dimensionally includes 512 pixels, one side of the real part of the result of the Fourier transform is expressed by, e.g., the graph shown in Fig. 7.

In this case, spatial frequencies at which the magnitude of the power spectrum of a real part obtained by Fourier transform is greatly changed depending on a scan range are, e.g., frequencies $f_a$, $f_b$, and $f_c$, and these frequencies are stored in the DSP memory 42 in advance. With this arrangement, change characteristics of the frequencies $f_a$, $f_b$, and $f_c$ of fetched image information are obtained, as shown in Fig. 8.

The change characteristics of the frequencies $f_a$, $f_b$, and $f_c$ of the image information in the scan range are obtained in the above-described manner. Thereafter, on the basis of the change characteristics, the CPU 12 selects a spatial frequency at which the maximum power spectrum appears near a focusing position to which the stage ST is manually adjusted and high-level change characteristics can be provided. In the case shown in Fig. 8, focusing position calculation method based on the spatial frequency $f_a$ is selected as an optimal focusing position calculation method and is stored in the DSP memory 42. Subsequently, a digital band-pass filter having the frequency $f_a$ as a center frequency is formed by the DSP 41 in accordance with the optimal focusing position calculation method stored in the DSP memory 42, and input image information is filtered by this band-pass filter, thus performing an automatic focusing operation while evaluating a focusing degree.

According to this example, the stage is scanned in the Z direction within a predetermined scan range including a focusing position to which the stage is manually adjusted by a user, and the power spectra of different spatial frequencies (focusing position calculation methods) set at the respective positions in advance are obtained. On the basis of changes in power spectra, the CPU selects a spatial frequency (optimal focusing position calculation method) which provides an optimal focusing position. Therefore, a focusing degree can be evaluated with high precision on the basis of image information obtained by performing optimal filter processing of a sample. As a result, the stage can always be positioned stably to the optimal focusing position reflecting the intention of the user with high precision. In addition, by selecting an optimal spatial frequency upon initialization, optimization of a filter, which is difficult to perform in real time even with the DSP 41, can be performed.

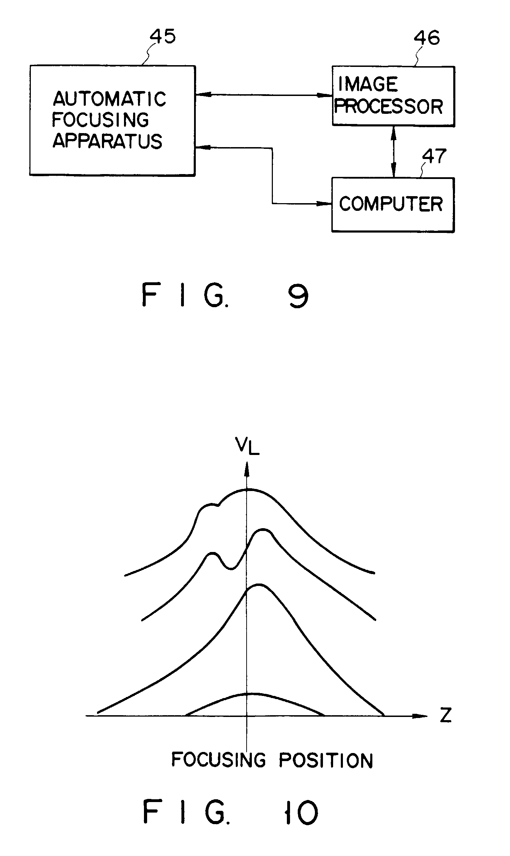

Fig. 9 shows still another practical example of the first embodiment of the present invention. In this example, an image processor 46 and a computer 47 are added to an automatic focusing apparatus 45 having the arrangement shown in Fig. 3. With this arrangement, since an optimal focusing position calculation method can be selected by using the memory and arithmetic functions of the image processor 46 and the computer 47, the operation capacity and memory size of the automatic focusing apparatus 45 can be reduced, thus realizing a reduction in cost and size of the apparatus. In the arrangements shown in Figs. 3 and 6, a focusing position calculation method which provides an optimal focusing position can be selected from complicated focusing position calculation methods and from a larger number of the same type or different types of focusing position detecting methods.

The first embodiment of the present invention is not limited to the examples described in above, but various changes and modifications can be made. For example, in the above examples, the image input section 11 is constituted by a solid imaging element, such as a CCD, but may be constituted by a general TV camera. In addition, in the above-described examples, the stage position detector 25 such as an encoder is arranged to detect the position of the stage ST in the Z direction. If, however, a stepping motor is used as the stage driving unit 21, position data of the stage may be obtained by counting driving pulses for the stepping motor by means of the CPU 12. Furthermore, adjustment of the relative distance between a sample and an objective optical system is not limited to the movement of the stage ST in the Z direction but may be performed by moving the objective optical system in the Z direction.

In the arrangement shown in Fig. 3, the four types of focusing position calculation methods based on the contrast evaluation function L in the above equations, which are obtained for L = 1, 5, 8, 10, are used. However, the present invention is not limited to the four types, but three or less types of calculation methods may be selected. If the capacity of the ROM 32 is large, a larger number of calculation methods may be stored, and an optimal method can be selected therefrom. If a method is selected from a larger number of calculation methods in this manner, further optimization can be expected.

In addition to selection of a focusing position calculation method which provides an optimal focusing position, a plurality of focusing position calculation methods may be properly combined to be used as an optimal focusing position calculation method. For example, in addition to the above-described contrast method, a technique is available, in which a luminance histogram is obtained to obtain its variances, and a focusing position is calculated from the obtained variances. One of evaluation value characteristics obtained by the contrast method and one of evaluation value characteristics obtained from the luminance histogram can be combined and added together, and focusing control can be performed by an optimal focusing position calculation method using both the characteristics.

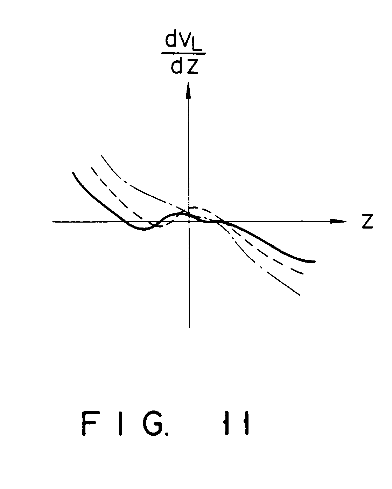

When a relatively thick sample, for which a stable operation is difficult to perform by using a general focusing technique, is to be observed, the $V_L$ characteristics shown in Fig. 10 may appear. In such a case, $dV_L/dz$ is calculated to obtain the $dV_L/dz$ characteristic curves shown in Fig. 11, and a curve having one zero-crossing point may be selected as a curve for an optimal focusing position calculation method. In this case, if the peak of the selected $V_L$ characteristic curve is deviated from the focusing position, a corresponding offset value must be set in advance. Note that if there is no characteristic curve having one zero-crossing point, and the $V_L$ characteristic curves respectively have a plurality of peaks, a peak is selected.

In addition, a plurality of samples may be used, and an optimal focusing position calculation method is selected in consideration of the average and variances of pieces of data obtained from these samples. With this operation, a more reliable optimal focusing position calculation method can be selected.

Furthermore, assume that a focusing operation is required with respect to a specific pattern of a sample. In this case, by adding conditions, e.g., positioning a region including the specific pattern at the center of the field of vision in initialization, a focusing degree can be efficiently evaluated in the initialization.

In the above-described embodiment, the objective optical system L may be driven instead of driving the stage ST by using the stage driving section 4. That is, either of the stage ST or the objective optical system L may be driven as long as they are driven relative to each other in the direction of the optical axis.

The first embodiment of the present invention is not limited to automatic focusing in the optical microscope described above but can be effectively applied to automatic focusing in various types of optical devices.

As described above, according to the first embodiment of the present invention, the optical system and a target object are driven relative to each other within a predetermined relative distance range including the relative distance between the optical system and the target object which are adjusted to a focusing position set by a user, thus detecting evaluation characteristics using a plurality of focusing position calculation methods. On the basis of these evaluation characteristics, a calculation method which provides an optimal focusing position in an automatic focusing operation is selected from a plurality of focusing position calculation methods. With this operation, the target object can always be positioned stably to the optimal focusing position desired by the user with high reproducibility and with high precision.

Moreover, in the application of the first embodiment of the present invention to a microscope, since a microscopic method to be used, a mirror base to be used, a sample, and the like are evaluated at the time of initialization, a substantially optimal focusing position calculation method can be selected. Therefore, high-precision, high-speed automatic focusing can be performed, and an effective focusing operation can be performed with respect to samples which are difficult to process in a conventional technique.

A focusing position detecting apparatus for an automatic focusing apparatus according to the second embodiment of the present invention will be described below with reference to the accompanying drawings.

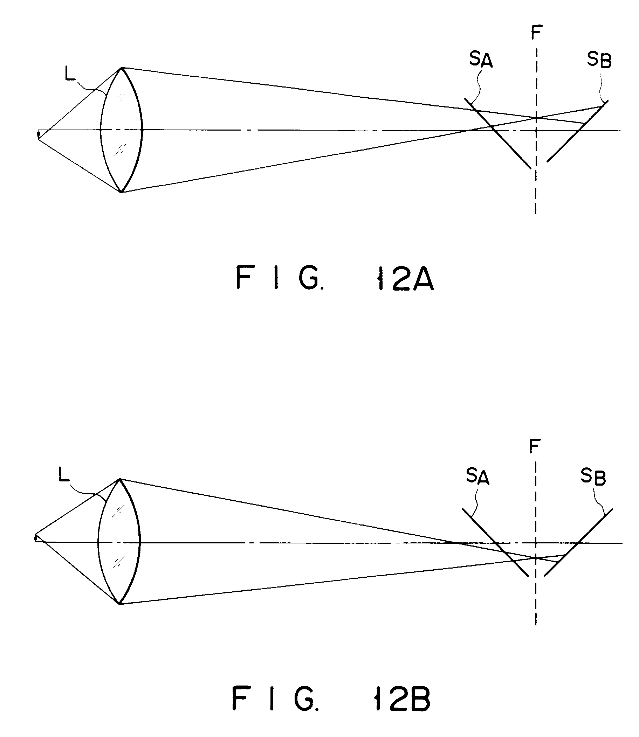

A principle of the focusing position detecting apparatus for the automatic focusing apparatus according to the second embodiment of the present invention will be briefly described first. As shown in Figs. 12A and 12B, the second embodiment is characterized in that a pair of light-receiving element arrays $S_A$ and $S_B$ are arranged on both sides of an image forming plane or a conjugate focal plane F of an optical system L at positions separated from the focal plane F by predetermined distances in the direction of the optical axis while the light-receiving surfaces of the arrays $S_A$ and $S_B$ are inclined at predetermined angles with respect to the optical axis.

With this arrangement, images based on different optical path lengths are formed in different light-receiving regions on the respective light-receiving planes of the light-receiving element arrays, and hence a plurality of output signals based on the different optical path lengths are obtained from the respective light-receiving regions. These output signals are respectively converted into evaluation values by predetermined evaluation functions, as will be described later. A focusing position is detected on the basis of the evaluation values. In this apparatus, therefore, a plurality of evaluation values based on different optical path lengths can be obtained without using a driving unit for moving the light-receiving element arrays as in a conventional technique, thereby improving the focusing precision.

A practical example based on the above principle will be described below.

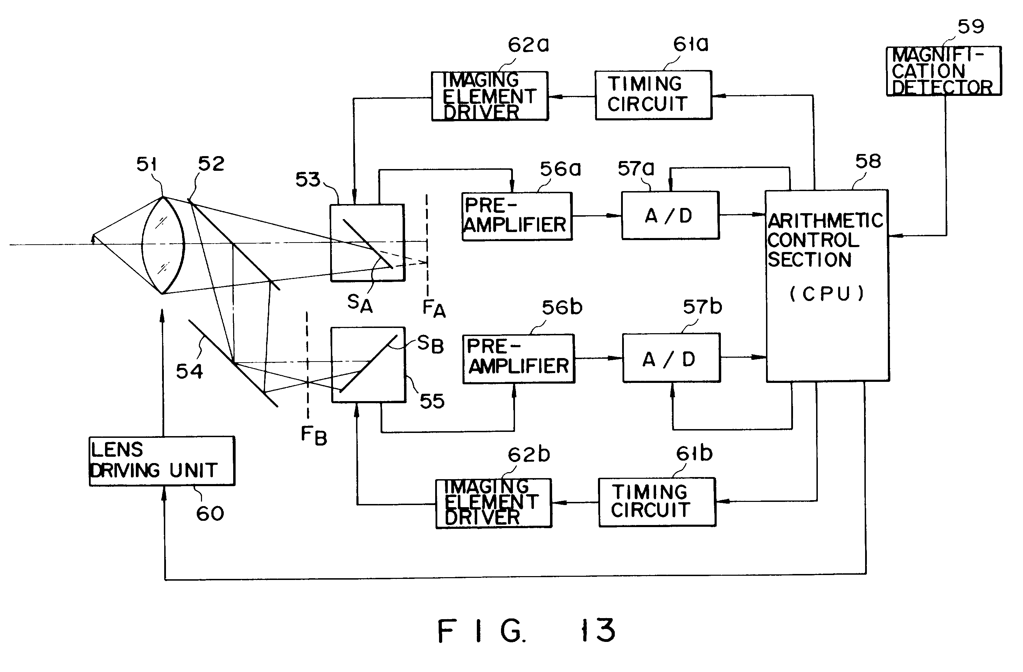

Fig. 13 shows an arrangement of a practical example of the focusing position detecting apparatus according to the second embodiment of the present invention. In this example, light transmitted through a focusing lens 51 of an optical system is separated into a transmitted light component and a reflected light component by a half mirror 52. Of these components, the transmitted light component is incident on a two-dimensional CCD array 53 which is arranged in front of a focal plane $F_A$ at a position separated therefrom by a predetermined distance in the direction of the optical axis while the light-receiving surface of the CCD array 53 is inclined at a predetermined angle with respect to the optical axis.

The reflected light component reflected by the half mirror 52 is reflected by a total reflection mirror 54 to be incident on a two-dimensional CCD array 55 which is arranged behind a focal plane $F_B$ at a position separated therefrom by a predetermined distance in the direction of the optical axis while the light-receiving surface of the CCD array 55 is inclined at a predetermined angle with respect to the optical axis.

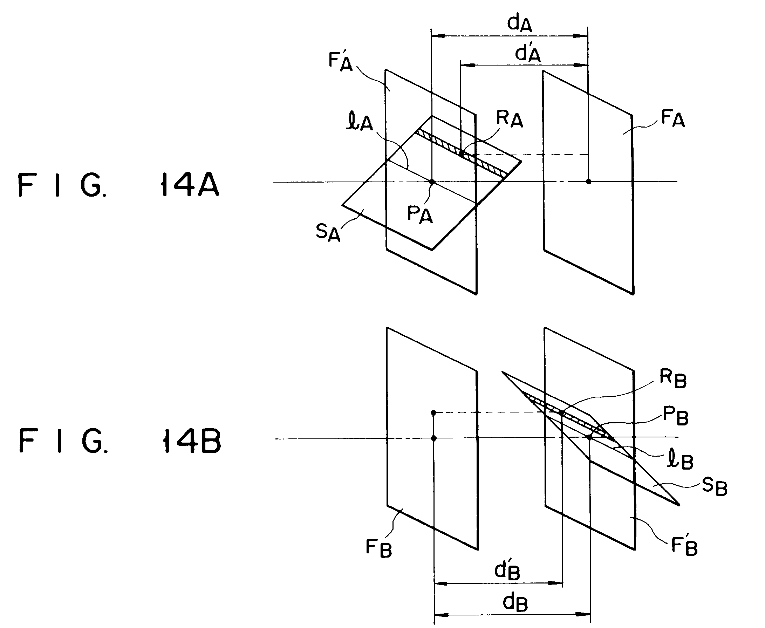

A relationship between the focal planes $F_A$ and $F_B$ and the two-dimensional CCD arrays 53 and 55 will be described in more detail below with reference to Figs. 14A and 14B.

The two-dimensional CCD arrays 53 and 55 are arranged such that distances $d_A$ and $d_B$ between the focal planes $F_A$ and $F_B$ and intersection points $P_A$ and $P_B$ where the light-receiving planes $S_A$ and $S_B$ of the two-dimensional CCD arrays 53 and 55 and the optical axis intersect are set to be equal to each other. In addition, planes which include the intersection points $P_A$ and $P_B$ and are perpendicular to the optical axis are respectively represented by $F_A'$ and $F_B'$, and intersection lines where the planes $F_A'$ and $F_B'$ and the light-receiving surfaces $S_A$ and $S_B$ intersect are respectively represented by $\ell_A$ and $\ell_B$. The two-dimensional CCD arrays 53 and 55 are arranged such that distances $d_A'$ and $d_B'$ between the focal planes $F_A$ and $F_B$ and light-receiving regions $R_A$ and $R_B$ separated from the intersection lines $\ell_A$ and $\ell_B$ by the same distance on the light-receiving surfaces $S_A$ and $S_B$ are set to be equal to each other. That is, the two-dimensional CCD arrays 53 and 55 are arranged such that the distances $d_A$ and $d_B$ are equal to each other, and the distances $d_A'$ and $d_B'$ are equal to each other. With this arrangement, substantial identical images are formed on the light-receiving regions $R_A$ and $R_B$ separated from the intersection lines $\ell_A$ and $\ell_B$ on the light-receiving surfaces $S_A$ and $S_B$ by the same distance.

Referring back to Fig. 13, signals read from the light-receiving regions $R_A$ and $R_B$ of the two-dimensional CCD arrays 53 and 55 arranged in the above-described manner are respectively converted into digital signals by A/D converters 57a and 57b through preamplifiers 56a and 56b. Thereafter, the digital signals are input to an arithmetic control section (CPU) 58. The CPU 58 is connected to a magnification detector 59 for detecting the magnification of the optical system so as to receive magnification data therefrom. The CPU 58 has two functions: converting output signals from the light-receiving regions of the two-dimensional CCD arrays 53 and 55 into evaluation values in accordance with predetermined evaluation functions; and selecting a pair of light-receiving regions (arbitrary light-receiving regions having the same optical length) $R_A$ and $R_B$, on each of which a predetermined image is formed, from a plurality of light-receiving regions having different optical path lengths, calculating a defocus amount from the evaluation values of the light-receiving regions $R_A$ and $R_B$ and corresponding magnification data, and generating a lens driving signal on the basis of the calculation result.

Upon reception of the lens driving signal from the CPU 58, a lens driving unit 60 moves the focusing lens 51 to a focusing position. In addition, the CPU 58 supplies commands to timing circuits 61a and 61b to drive the two-dimensional CCD arrays 53 and 55 in a predetermined time sequence. Timing signals output from these timing circuits 61a and 61b are respectively supplied to the two-dimensional CCD arrays 53 and 55 through imaging element drivers 62a and 62b. With this operation, stored charges are read from the two-dimensional CCD arrays 53 and 55 as image signals, respectively.

An operation of this example having the above-described arrangement will be described below.

In this example, as shown in Fig. 14A and 14B, the two-dimensional CCD arrays 53 and 55 are arranged such that the distances $d_A$ and $d_B$, and the distances $d_A'$ and $d_B'$ are respectively set to be equal to each other, and the light-receiving surfaces $S_A$ and $S_B$ are inclined at the predetermined angles with respect to the optical axis, respectively. Therefore, substantially identical out-of-focus images are formed on the light-receiving surfaces of the two-dimensional CCD arrays 53 and 55 at the time of focusing. As a result, images based on different optical path lengths from the focal planes are formed in the respective light-receiving regions of the light-receiving surfaces $S_A$ and $S_B$, while identical images are formed on the light-receiving regions $R_A$ and $R_B$ whose optical path lengths from the light-receiving surfaces $S_A$ and $S_B$ to the focal planes are the same. The two-dimensional CCD arrays 53 and 55 on which such images are formed are driven by the imaging element drivers 62a and 62b so that charges are read from the respective light-receiving regions $R_A$ and $R_B$.

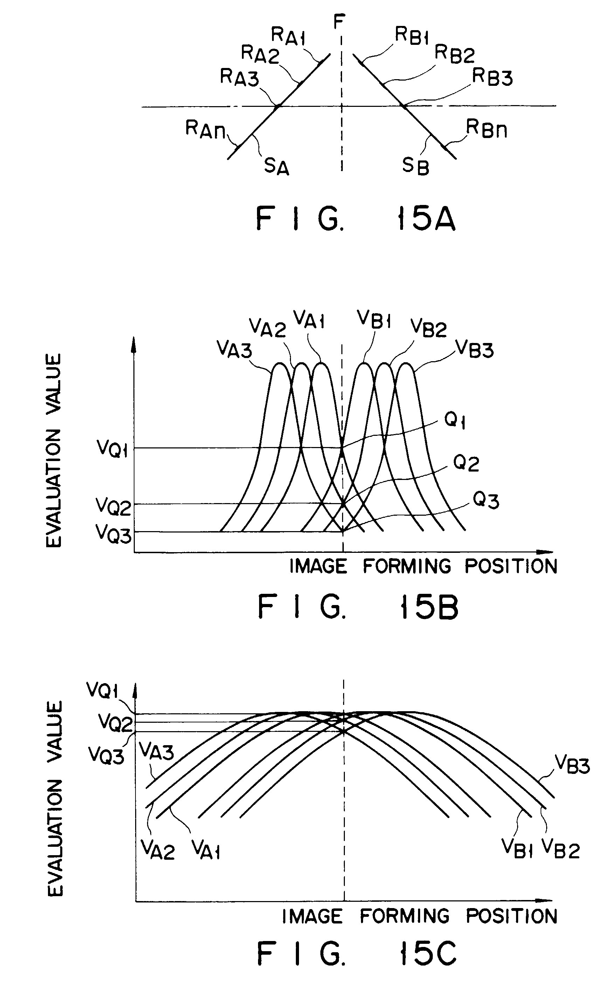

As shown in Fig. 15A, if pairs of light-receiving regions respectively having the same optical path lengths from the focal planes $F_A$ and $F_B$ are respectively represented by $(R_{A1}, R_{B1})$, $(R_{A2}, R_{B2})$, ... $(R_{An}, R_{Bn})$, and evaluation values based on output signals from the respective pairs of light-receiving regions are respectively represented by $(V_{A1}, V_{B1})$, $(V_{A2}, V_{B2})$, ... $(V_{An}, V_{Bn})$, relationships between the evaluation values $(V_{A1}, V_{B1})$, $(V_{A2}, V_{B2})$, ... $(V_{An}, V_{Bn})$ and the image forming positions are obtained, as shown in Figs. 15B and 15C. Note that Fig. 15B shows evaluation values at a low magnification; and Fig. 15C, evaluation values at a high magnification.

The CPU 58 converts output signals from the two-dimensional CCD arrays 53 and 55 into the evaluation values $(V_{A1}, V_{B1})$, $(V_{A2}, V_{B2})$, ... $(V_{An}, V_{Bn})$, and evaluation values $V_{Q1}, V_{Q2}, ... V_{Qn}$ at points $Q_1, Q_2, ... Q_n$ at which the evaluation values of the respective pairs are respectively set to be equal to each other are obtained. Of these evaluation values $V_{Q1}, V_{Q2}, ... V_{Qn}$, evaluation values $V_{Am}$ and $V_{Bm}$ which satisfy $V_L < V_{Qm} < V_H$ are selected and extracted, and a position at which a difference $\Delta V = V_A - V_B$ becomes 0 is detected as an focusing position. In this case, $V_L$ and $V_H$ are values for setting the lower and upper limits of evaluation values. If the value $V_{Qm}$ is excessively large, the difference between the values $V_L$ and $V_H$ becomes undesirably small. If the value $V_{Qm}$ is excessively small, detection is difficult to perform. Therefore, these values are set in a range in which no deterioration in focusing precision occurs.

More specifically, as shown in Fig. 15B, if a low-magnification objective lens is used, the depth of focus on the image side is small, and change amounts of the evaluation values $V_A$ and $V_B$ in the direction of the optical axis are increased. For this reason, a value $VQ_3$ is very small when a difference $\Delta V_3$ between evaluation values $(V_{A3}, V_{B3})$ based on output signals from light-receiving regions $(R_{A3}, R_{B3})$, i.e., $\Delta V_3 = V_{A3} - V_{B3}$, becomes 0. This makes it difficult to detect the value $V_{Q3}$. In this example, therefore, the small values $V_{A3}$ and $V_{B3}$ are cut by the lower limit value $V_L$, and evaluation values $(V_{A1}, V_{B1})$ based on output signals from light-receiving regions $(R_{A1}, R_{B1})$ are selected such that the evaluation value difference $\Delta V$ is sufficiently large compared with the value $V_{Q3}$. Since the value $V_{Q1}$ at which the difference between the selected values $V_{A1}$ and $V_{B1}$ becomes0 is sufficiently large compared with the value $V_{Q3}$, the value $V_{Q1}$ can be easily detected. In addition, since a gradient is large when a difference $\Delta V_1$ (= $V_{A1}$ - $V_{B1}$) is large, the focusing precision is improved.

As shown in Fig. 15C, if a high-magnification objective lens is used, the depth of focus on the image side is large, and changes in evaluation values $V_A$ and $V_B$ in the direction of the optical axis are reduced. For this reason, a difference $\Delta V_1$ between evaluation values $V_{A1}$ and $V_{B1}$ based on output signals from the light-receiving regions $R_{A1}$ and $R_{B1}$, i.e., $\Delta V_1 = V_{A1}-V_{B1}$, is small. In addition, since a value $V_{Q1}$ of $(V_{A1}, V_{B1})$ becomes substantially equal to a peak value when $\Delta V_1 = 0$, the gradient of $\Delta V$ is reduced, and focusing position detection is difficult to perform. In this example, therefore, evaluation values like the evaluation values $V_{A1}$ and $V_{B1}$ which reduce the gradient of $\Delta V$ to make focusing position detection difficult are cut by the upper limit value $V_H$. With this operation, the evaluation values $(V_{A3}, V_{B3})$ based on output signals from the light-receiving regions $(R_{A3}, R_{B3})$ are selected such that $\Delta V$ has a sufficient gradient.

In this example, in order to obtain out-of-focus image information based on an optical path difference which varies depending on a magnification, the CPU 58 selectively uses output signals from the two-dimensional CCD arrays 53 and 55 on the basis of magnification data obtained by the magnification detector 59, thus detecting the focusing position of the optical system in accordance with evaluation values such as contrast values. Thereafter, a distance and direction to a focusing position detected from the current position of the optical system are calculated. A driving signal is generated by the calculation result and is output to the lens driving unit 60.

As described above, according to this example, since the two-dimensional CCD arrays 53 and 55 are arranged such that the distances $d_A$ and $d_B$ from the focal planes $F_A$ and $F_B$ to the light-receiving surfaces $S_A$ and $S_B$, and the distances $d_A'$ and $d_B'$ from the focal planes $F_A$ and $F_B$ to the light-receiving regions $RA$ and $R_B$ are respectively set to be equal to each other, and the light-receiving surfaces $S_A$ and $S_B$ are inclined at predetermined angles with respect to the optical axis, image information based on a plurality of different optical path lengths, i.e., a plurality of evaluation values, can be obtained without using a moving unit for mechanically moving the two-dimensional CCD arrays 53 and 55, thereby simplifying the arrangement of the apparatus and allowing high-precision focusing adjustment.

In addition, a range of evaluation values which allows proper focusing position detection is set, and an evaluation value which facilitates detection and provides a sufficient gradient is selected from the range in accordance with the magnification of the optical system. Therefore, even if the magnification of the optical system is changed, high-precision focusing adjustment can always be performed, thus greatly improving the reliability of the apparatus.

In the example described with reference to Fig. 13, after output signals from the two-dimensional CCD arrays 53 and 55 are converted into digital signals by the A/D converters 57a and 57b, evaluation functions are calculated. However, evaluation functions may be calculated on the basis of analog signals.

Another practical example of the second embodiment of the present invention will be described below.

A hardware arrangement of this example is the same as that of the apparatus shown in Fig. 13 and is characterized in a method of processing pieces of image information, based on a plurality of optical path lengths, which are simultaneously obtained.

In this example, sum signals

$$\sum_{i=m}^{n} V_{Ai}$$

and

$$\sum_{i=m}^{n} V_{Bi}$$

obtained on the basis of pairs of evaluation values from light-receiving regions having larger optical path lengths than the light-receiving regions $R_{Am}$ and $R_{Bm}$, which have optimal optical path lengths selectively used for each magnification in the first example, are used as evaluation values for a focusing position detecting operation.

Fig. 16A shows evaluation values $V_{An}$ and $V_{Bn}$ based on output signals from light-receiving regions $R_{An}$ and $R_{Bn}$ having different optical path lengths from the focal planes of a pair of light-receiving surfaces $S_A$ and $S_B$ at a given magnification of the optical system, and sums

$$\sum_{n} V_{An}$$

and

$$\sum_n V_{Bn}$$

based on the evaluation values $V_{An}$ and $V_{Bn}$. Referring to Fig. 16A, a pair of light-receiving regions having optimal optical path lengths selectively used for a predetermined magnification are $R_{A2}$ and $R_{B2}$, and $n \geqq 2$.

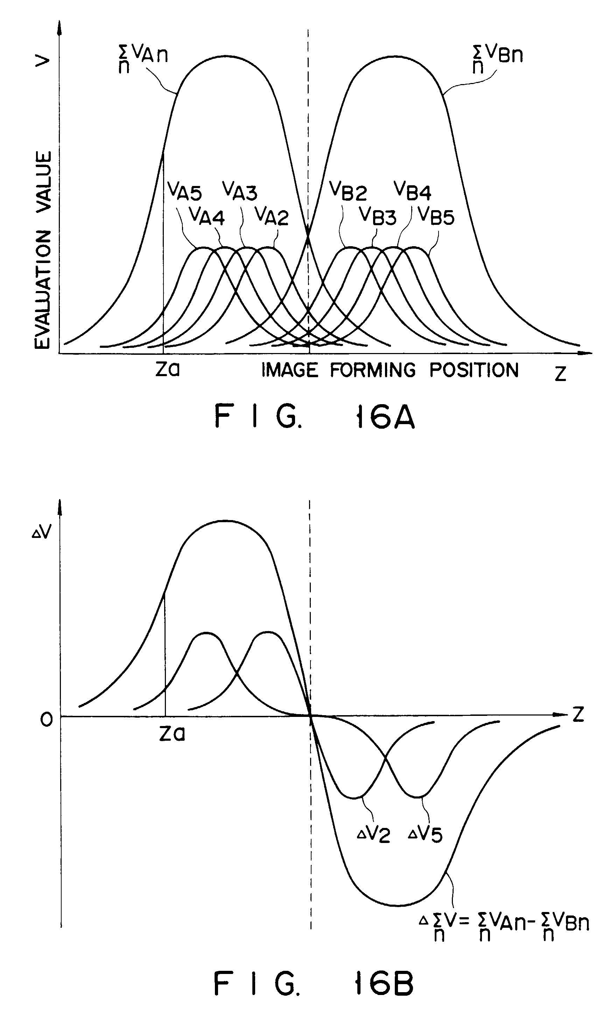

Assume that the position of a real image on the optical axis is represented by Za when evaluation values shown in Fig. 16A are obtained. In this case, if the evaluation values $V_{A2}$ and $V_{B2}$ based on the optimal optical path lengths in the first example are used, since the level of an evaluation value at the position Za is excessively small, a focusing position cannot be detected, i.e., a corresponding region falls outside a so-called capture range. In addition, if evaluation values $V_{A5}$ and $V_{B5}$ based on output signals from light-receiving regions $R_{A5}$ and $R_{B5}$ having larger optical path lengths from the focal planes than the light-receiving regions $R_{A2}$ and $R_{B2}$ are used, the level of an evaluation value at the position Za is sufficiently increased. However, as shown in Fig. 16B, since the gradient of an evaluation value difference $\Delta V_5$ near the focusing position where the difference $\Delta V_5 = V_{A5} - V_{B5}$ becomes 0 is small, high-precision focusing position detection cannot be performed.

In the second example, therefore, evaluation values based on output signals from light-receiving regions having larger optical path lengths from the focal planes than the light-receiving regions $R_{A2}$ and $R_{B2}$ are added together to obtain sums $\Sigma V_{An}$ and $\Sigma V_{Bn}$ as evaluation functions. If the sums of evaluation values based on output signals from light-receiving regions having optical path lengths larger than optimal optical path lengths are used as evaluation functions, a sufficient evaluation level as the position Za can be ensured as shown in Fig. 16A, and at the same time, an evaluation function

$$\Delta \sum_n V_n = \sum_n V_{An} - \sum_n V_{Bn}$$

near the focusing position has a large gradient, thus widening the capture range.

As described above, according to the second example, since the sums of evaluation values based on output signals from light-receiving regions having optical path lengths from the focal planes larger than optimal optical path lengths are used as evaluation functions, the capture range can be widened, and focusing position detection can be performed with higher precision.

As described in detail above, according to the second embodiment of the present invention, there is provided a focusing position detecting apparatus for an automatic focusing apparatus which has a simple arrangement, and can properly detect a focusing position regardless of changes in magnification of the optical system, thereby realizing a high-precision focusing position detecting operation.

The third embodiment of the present invention will be described below with reference to the accompanying drawings.

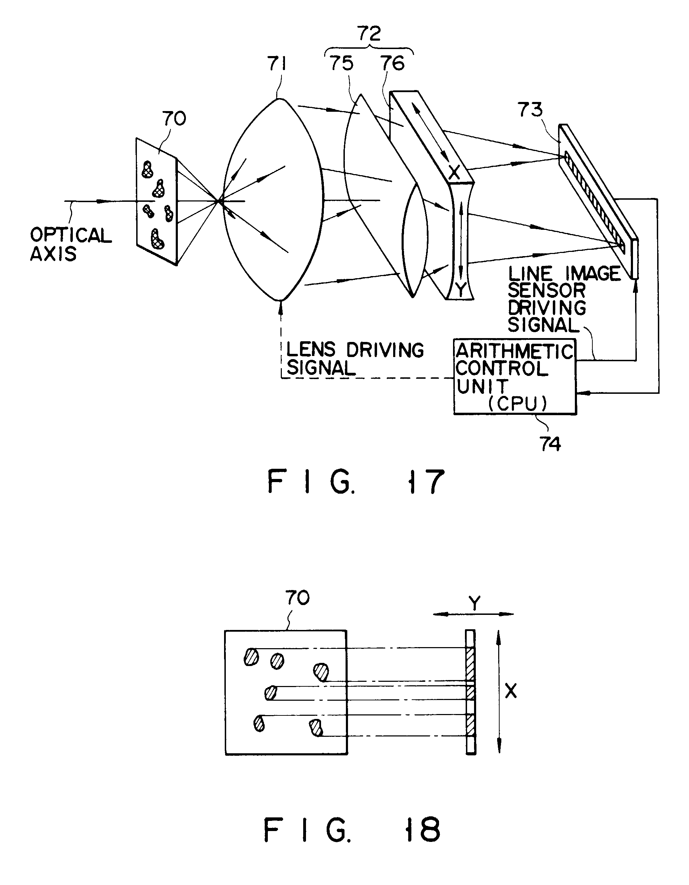

Fig. 17 shows a schematic arrangement of a first practical example of a focusing position detecting apparatus for an automatic focusing apparatus according to the third embodiment of the present invention. The apparatus of this example comprises an imaging lens 71 for forming a sample image 70 obtained by an optical system (not shown) such as an optical microscope, a unidirectionally compressing image forming optical system 72 for compressing the two-dimensional image formed by the imaging lens 71 in a direction indicated by an arrow Y perpendicular to the optical axis, a line image sensor 73 constituted by light-receiving elements arranged at an image forming position at which an image line is formed by the optical system 72, and an arithmetic control unit (CPU) 74 which has a focusing position detecting/calculating function based on, e.g., a plurality of evaluation values, and receives scanning signals output from the line image sensor 73.

Note that the CPU 74 is designed to supply a driving signal to the line image sensor 73 to perform a scanning operation, and to supply a lens driving signal to control the imaging lens 71 in the direction of the optical axis so as to obtain an optimal focusing result.

The compressing image forming optical system 72 is constituted by a cylindrical convex lens 75 and a cylindrical concave lens 76.

An operation of the first practical example having the above-described arrangement will be described below.

Assume that a focusing position detecting operation is to be performed with respect to an object image in which sample components are dispersed as indicated by a left-hand portion in Fig. 18.

In this case, a two-dimensional image of a sample image 70 transmitted through the imaging lens 71 is compressed in a direction indicated by an arrow Y by the unidirectionally compressing image forming optical system 72 to form an image line on the light-receiving elements of the line image sensor 73. Since the image line formed on the light-receiving elements of the line image sensor 73 at this time is obtained by compressing the two-dimensional image of the sample image 70 into a line in the Y direction as indicated by a right-hand portion in Fig. 18, it always includes image information of the sample components, as indicated by hatched lines in Fig. 18. The image line including such image information is scanned by the line image sensor 73 and is input to the CPU 74 as a scanning signal. The CPU 74 performs arithmetic processing for the scanning signal including the image information for focusing position detection, and controls the imaging lens 71 to obtain an optimal focusing result, thus detecting a focusing position. This arithmetic processing can be performed on the basis of a plurality of evaluation values, as in the first and second embodiments.

As described above, according to this example, a two-dimensional image of the sample image 70 is converted into a one-dimensional image by the unidirectionally compressing image forming optical system 72 to allow the image line to include image information, and a scanning signal obtained by scanning the image line by using the line image sensor 73 is fetched in the arithmetic control unit 74 to detect a focusing position. Therefore, a scanning line always includes image information, and image information for focusing position detection can be obtained by one scanning operation. That is, the number of times of movement of the line image sensor 73 can be substantially decreased to 0, and the arithmetic processing amount can be greatly reduced, thus detecting a focusing position at a very high speed.

In addition, since the line image sensor 73 is fixed to the position where an image line is formed, an image sensor moving unit used in a conventional focusing position detecting apparatus is not required. This simplifies the arrangement of the apparatus and allows a reduction in size and cost of the apparatus.

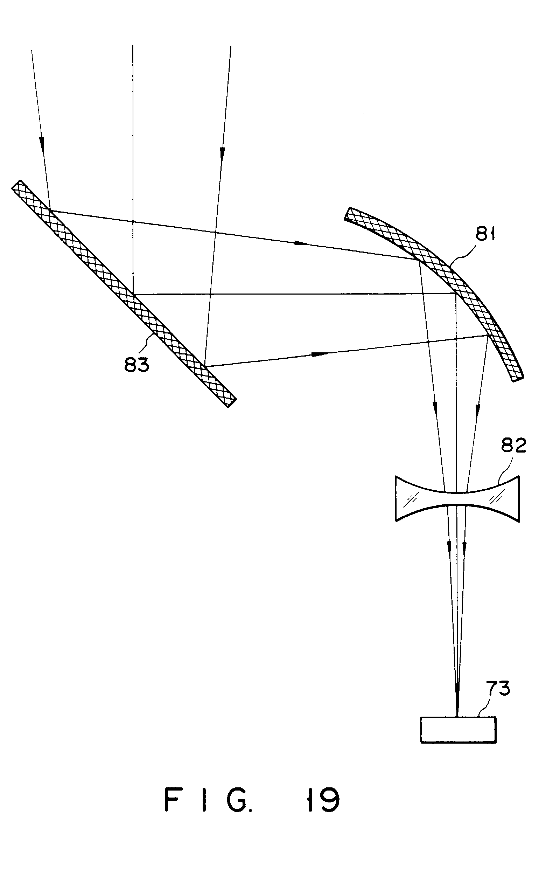

In the example shown in Fig. 17, the unidirectionally compressing image forming optical system 72 is constituted by the cylindrical convex and concave lens 75 and 76. However, as shown in Fig. 19, the optical system 72 may be constituted by a cylindrical concave mirror 81 and a cylindrical concave lens 82. Note that reference numeral 83 in Fig. 19 denotes a plane mirror for causing a two-dimensional sample image to be incident on the cylindrical concave mirror 81.

Another practical example of the third embodiment of the present invention will be described below.

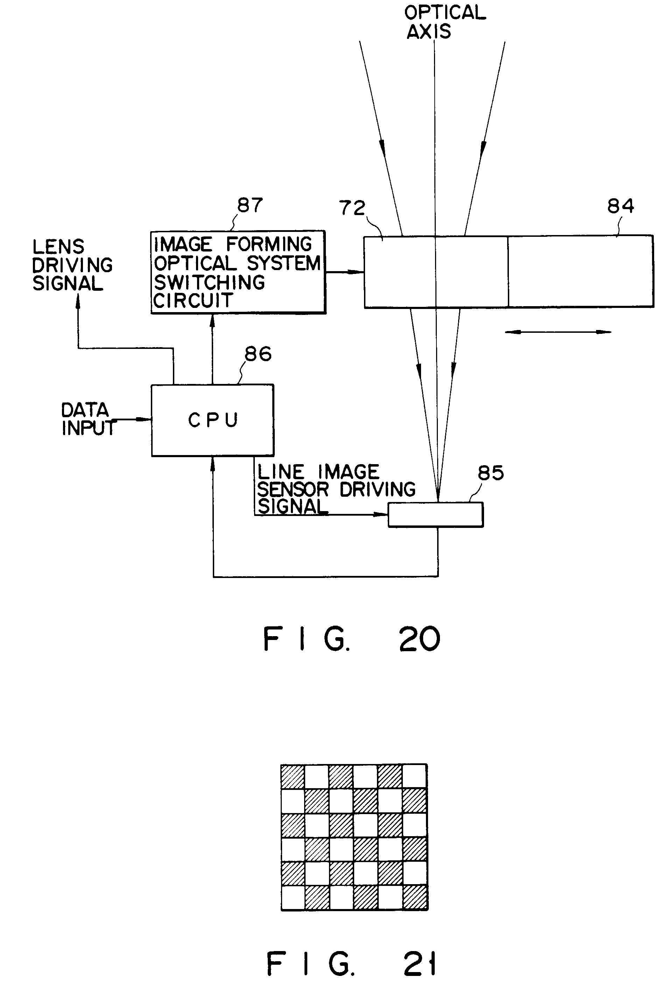

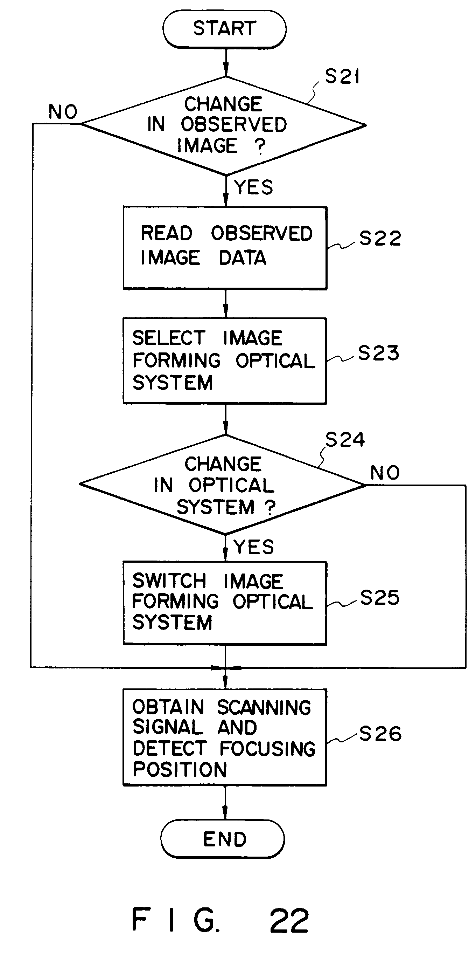

In this example, as shown in Fig. 20, a unidirectionally compressing image forming optical system 72 and a non-compressing image forming optical system 84, both having the same image forming position, are arranged to be movable in a direction (indicated by an arrow in Fig. 20) perpendicular to the optical axis. An image sensor 85 is arranged at the image forming position of the unidirectionally compressing image forming optical system 72 and the non-compressing image forming optical system 84. A scanning signal output from the image sensor 85 is input to an arithmetic control unit (CPU) 86. The CPU 86 performs operations in accordance with the flow chart shown in Fig. 22. In response to a command from the CPU 86, an image forming optical system switching circuit 87 switches the optical systems 72 and 84 and moves one of them to the position of the optical axis.

Assume that an observed image or an object image is a patterned image, as shown in Fig. 21. In this case, if the two-dimensional image is compressed into a linear image, the contrast of the image may be deteriorated. Therefore, when the image shown in Fig. 21 is to be processed, an image formed by the non-compressing image forming optical system 84 is scanned.

An operation of the second practical example having the above-described arrangement will be described below with reference to Fig. 21.

Assume that a focusing position detection operation is performed with respect to an image to be observed by means of a microscope. In this case, if there is a change in observed image (step S21), the type and contrast data of a new observed image are read (step S22). Either the unidirectionally compressing image forming optical system 72 or the non-compressing image forming optical system 84 is selected in accordance with the read data (step S23). More specifically, if sample components of an observed image are dispersed as indicated by the left-hand portion in Fig. 18, the unidirectionally compressing image forming optical system 72 is selected. If an observed image is patterned as shown in Fig. 21, the non-compressing image forming optical system 84 is selected.

If the image forming optical system currently placed on the position of the optical axis is different from the selected image forming optical system, the CPU 86 supplies a command to the image forming optical system switching circuit 87 to set the selected image forming optical system 73 or 84 to the position of the optical axis (steps S24 and S25). The image formed on the image sensor 85 is scanned, and the scanning signal is fetched in the CPU 86. The CPU 86 then executes arithmetic processing for detecting a focusing position on the basis of the image information included in the scanning signal, thus calculating a focusing position in the same manner as described with reference to Fig. 17 (step S26). This arithmetic processing may be performed on the basis of a plurality of evaluation values, as in the first and second embodiments.

According to the second example described above, the same effect as that of the first example can be obtained. In addition, since the unidirectionally compressing image forming optical system 72 and the non-compressing image forming optical system 84 can be switched from each other in accordance with a sample image, an image suitable for focusing position detection can always be formed on the image sensor 85. Therefore, highly reliable focusing position detection can always be performed.

In the second example, switching of the image forming optical systems is automatically performed. However, an operator may manually switch the image forming optical systems (72, 84).

In the third embodiment of the present invention, a two-dimensional sample image is compressed into a linear image in one direction perpendicular to the optical axis and is formed on the image sensor by means of the compressing image forming optical system in the above-described manner. Since a sample image is compressed in one direction, even if the two-dimensional image is based on dispersed sample components, the image line formed on the image sensor reliably includes image information. Therefore, if arithmetic processing is performed by inputting a scanning signal, obtained by scanning such an image, to an arithmetic control section, a focusing position can be detected by one input operation of image information.

In addition, the compressing image forming optical system having the above-described function and the non-compressing image forming optical system can be switched from each other in accordance with observed image conditions. Therefore, if sample components are dispersed, an image line formed by the compressing image forming optical system is scanned. In contrast to this, if image compression leads to a deterioration in image information, an image formed by the non-compressing image forming optical system is scanned. With this operation, an image suitable for focusing position detection can always be formed.

As has been described in detail above, according to the third embodiment of the present invention, there is provided a focusing position detecting apparatus for an automatic focusing apparatus which has a simple, compact arrangement and can greatly increase the focusing position detecting speed.

Furthermore, there is provided a focusing position detecting apparatus for an automatic focusing apparatus which can form an image suitable for focusing position detection on an image sensor in accordance with a sample image, and can always perform highly reliable focusing position detecting operation.

## Claims

1. An automatic focusing apparatus comprising:

   driving means (21-23) for moving an object (SA) to be focused and an objective optical system (MS) relative to each other in the direction of the optical axis (Z) of the objective optical system (MS); image information detecting means (11-17) for detecting image information of the object (SA), obtained by the objective optical system (MS); memory means (32) for previously storing data defining a plurality of different focusing position calculation methods, each focusing position calculation method being for use in observation of objects of similar types; first initialization means (12) for supplying an instruction indicating the start of a scanning operation to said driving means (21-23); starting means (33) for starting the operation of said first initialization means after a user manually detects an optimum focusing position for an object selected from objects of similar types to be focused by moving the selected object and the objective optical system (MS) relative to each other; wherein the scanning operation performed by said driving means is carried out in a stepwise manner within a predetermined focusing range including the optimum focusing position set by the user; initial data fetching means (12) for fetching a plurality of results obtained by performing the plurality of different focusing position calculation methods using the data stored in said memory means (32) and according to the image information relative to the selected object detected by said image information detecting means during scanning by said driving means (21-23) according to the instruction supplied by said first initialization means (12); second initialization means (12) for selecting an optimum focusing position calculation method from the plurality of focusing position calculation methods for a focusing operation in accordance with the plurality of results fetched by said initial data fetching means (12) and the optimum focusing position set by the user; and control means (12) for performing the optimum focusing position calculation method and for detecting a focusing position corresponding to objects other than the selected object from among objects of similar types by controlling said driving means (21-23) in accordance with the result obtained by performing the optimum focusing position calculating method.

2. An apparatus according to claim 1, wherein differences of the data of the plurality of different focusing position calculation methods comprise a plurality of spatial sampling pitches to the image information of said object (SA).

3. An apparatus according to claim 1, wherein the data of the plurality of different focusing position calculation methods comprises spatial frequency filters (2) and fundamental calculation methods for processing the image information after filtering by the spatial frequency filters, and differences of the data of the plurality of different focusing position calculation methods comprise band widths of the spatial frequency filters (2).

4. An apparatus according to claim 1, wherein the data of the plurality of different focusing position calculation methods comprises fundamental calculation methods and correcting methods which correct calculation values of the fundamental calculation methods, and differences of the data of the plurality of different focusing position calculation methods comprise the correcting methods or correcting amounts of the correcting methods.

5. An automatic focusing apparatus according to anyone of the preceding claims, further comprising:

   means for performing an arithmetic operation according to a specified standard focusing position calculation method when a focusing position detecting operation is performed for objects of different types; and means for selecting a focusing position calculation method which is optimum for the objects of similar types by operating said first and second initialization means when the objects of similar types are detected.

6. An apparatus according to anyone of the preceding claims, wherein said information detecting means (11-17) includes photo-electric conversion means (D, 11) and an optical system (L, 51, 53, 55) for projecting an image of said object (SA) to said photo-electric conversion means.

7. An apparatus according to claim 6, wherein said optical system (L, 51, 53, 55) includes a pair of light-receiving element arrays (53, 55) arranged before and behind a focal plane of said objective optical system (MS) for forming an object image or a conjugate focal plane at positions separated therefrom by predetermined distances in the direction of the optical axis, and performing means (58) for performing arithmetic processing of output signals from said pair of light-receiving element arrays (53, 55) in accordance with predetermined evaluation functions, and for detecting a focusing position on the basis of a difference between evaluation values obtained by the arithmetic processing is provided, and wherein said pair of light-receiving element arrays (53, 55) are arranged such that light-receiving surfaces thereof are inclined at predetermined angles with respect to the focal plane or the conjugate focal plane, and the optical path lengths from the light-receiving surfaces, on each of which a predetermined image is formed, to the focal plane or the conjugate focal plane are set to be equal to each other.

8. An apparatus according to claim 7, wherein said performing means (58) produces output signals from a pair of light-receiving regions on which identical images are formed, which are used as a pair of image information, and forms evaluation functions based on a plurality of pairs of image information obtained by output signals from a plurality of light-receiving regions defining a plurality of different optical path lengths.

9. An apparatus according to claim 8, wherein the evaluation functions are formed by adding the evaluation functions calculated on the basis of a plurality of video information.

10. An apparatus according to anyone of claims 1 to 9 comprising said objective optical system (MS), wherein said objective optical system (MS) includes a compressing image forming optical system (72) for compressing a two-dimensional image of a sample image to be formed in a direction perpendicular to the optical axis, and said image information detecting means includes an image sensor (73), arranged near an image focusing line formed by said compressing image forming optical system (72), for scanning the image focusing line, and wherein calculation means for detecting a focusing position on the basis of image information of the sample image which is included in a scanning signal output from said image sensor (73) is provided.

11. An apparatus according to anyone of claims 1 to 9 comprising said objective optical system (MS), wherein said objective optical system (MS) includes a compressing image forming optical system (72) for compressing a two-dimensional image of a sample image to be formed in a direction perpendicular to the optical axis and a non-compressing image forming optical system (84) for forming a two-dimensional image of the sample image at the same image forming position as that of said compressing image forming optical system (72), and said image information detecting means includes an image sensor for scanning the image formed by said compressing image forming optical system and the image formed by said non compressing image forming optical system, and wherein arithmetic operation means (86) for detecting a focusing position on the basis of image information of the sample image which is included in scanning signal output from said image sensor (85), and means (87) for performing focusing position detection by switching said compressing image forming optical system (82) and said noncompressing image forming optical system (84) in accordance with conditions of the sample image, are provided.

**Patentansprüche**

1. Eine automatische Fokussiervorrichtung mit:

Antriebsvorrichtungen (21-23) zur Bewegung eines zu fokussierenden Objektes (SA) und eines optischen Objektivsystems (MS) relativ zueinander in Richtung der optischen Achse (Z) des optischen Objektivsystems (MS);
Bildinformations-Erkennungsvorrichtungen (11-17) zur Erkennung von Bildinformationen des Objektes (SA), welche durch das optische Objektivsysteme (MS) erhalten wurden;
Speichervorrichtungen (32) zum Vorab-Speichern von Daten, welche eine Mehrzahl von unterschiedlichen Fokussierpositions-Berechnungsverfahren definieren, wobei jedes Fokussierpositions-Berechnungsverfahren zur Verwendung bei der Beobachtung von Objekten ähnlichen Typs ist;
ersten Initialisierungsvorrichtungen (12) zur Zufuhr eines Befehls an die Antriebsvorrichtungen (21-23), der den Beginn eines Abtastvorganges anzeigt;

Startvorrichtungen (33) zum Beginn des Betriebes der ersten Initialisierungsvorrichtungen, nachdem ein Benutzer von Hand ein optimale Fokussierposition für ein Objekt erkannt hat, das aus Objekten ähnlicher zu fokussierender Typen ausgewählt wurde, indem das ausgewählte Objekt und das optische Objektivsystem (MS) relativ zueinander bewegt wurden; wobei der durch die Antriebsvorrichtungen durchgeführte Abtastvorgang schrittweise innerhalb eines bestimmten Fokussierbereiches einschließlich der optimalen Fokussierposition, welche von dem Benutzer festgesetzt wurde, durchgeführt wird;

Anfangsdaten-Sammelvorrichtungen (12) zum Sammeln einer Mehrzahl von Ergebnissen, die durch Durchführung der Mehrzahl von unterschiedlichen Fokussierpositions-Berechnungsverfahren unter Verwendung der in den Speichervorrichtungen (32) gespeicherten Daten und abhängig von den Bildinformationen bezüglich des ausgewählten Objektes, erkannt durch die Bildinformations-Erkennungsvorrichtungen während des Abtastens durch die Antriebsvorrichtungen (21-23) abhängig von dem Befehl von den ersten Initialisierungsvorrichtungen (12), erhalten wurden;

zweiten Initialisierungsvorrichtungen (12) zum Auswählen eines optimalen Fokussierpositions-Berechnungsverfahrens aus der Mehrzahl von Fokussierpositions-Berechnungsverfahren für einen Fokussiervorgang abhängig von der Mehrzahl von Ergebnissen, die von den Anfangsdaten-Sammelvorrichtungen (12) gesammelt wurden und abhängig von der durch den Benutzer festgesetzten optimalen Fokussierposition; und

Steuervorrichtungen (12) zur Durchführung des optimalen Fokussierpositions-Berechnungsverfahrens und zum Erkennen einer Fokussierposition entsprechend Objekten anders als dem aus den Objekten ähnlicher Typen ausgewählten Objekt, indem die Antriebsvorrichtungen (21-23) abhängig von dem Ergebnis gesteuert werden, welches durch Durchführung des optimalen Fokussierpositions-Berechnungsverfahren erhalten wird.

2. Eine Vorrichtung nach Anspruch 1, wobei Unterschiede in den Daten der Mehrzahl von unterschiedlichen Fokussierpositions-Berechnungsverfahren eine Mehrzahl von räumlichen Abtastunterteilungen zu der Bildinformation des Objektes (SA) aufweisen.

3. Eine Vorrichtung nach Anspruch 1, wobei die Daten der Mehrzahl von unterschiedlichen Fokussierpositions-Berechnungsverfahren räumliche Frequenzfilter (2) und grundlegende Berechnungsverfahren zur Bearbeitung der Bildinformation nach Filterung durch die räumlichen Frequenzfilter aufweisen, und Unterschiede in den Daten der Mehrzahl von unterschiedlichen Fokussierpositions-Berechnungsverfahren Bandbreiten der räumlichen Frequenzfilter (2) aufweisen.

4. Eine Vorrichtung nach Anspruch 1, wobei die Daten der Mehrzahl von unterschiedlichen Fokussierpositions-Berechnungsverfahren grundlegende Berechnungsverfahren und Korrekturverfahren aufweisen, welche Berechnungswerte der grundlegenden Berechnungsverfahren korrigieren, und Differenzen der Daten der Mehrzahl von unterschiedlichen Fokussierpositions-Berechnungsverfahren die Korrekturverfahren oder Korrekturmengen der Korrekturverfahren aufweisen.

5. Eine automatische Fokussiervorrichtung nach einem der vorhergehenden Ansprüche, weiterhin mit:

Vorrichtungen zur Durchführung eines arithmetischen Vorganges abhängig von einem spezifizierten Standard-Fokussierpositions-Berechnungsverfahren, wenn ein Fokussierpositions-Erkennungsvorgang für Objekte unterschiedlichen Typs durchgeführt wird; und

Einrichtungen zum Auswählen eines Fokussierpositions-Berechnungsverfahrens, welches für die Objekte ähnlichen Typs optimal ist durch Betreiben der ersten und zweiten Initialisierungsvorrichtungen, wenn die Objekte von ähnlichem Typ erkannt werden.

6. Eine Vorrichtung nach einem der vorhergehenden Ansprüche, wobei die Informations-Erkennungsvorrichtungen (11-17) photoelektrische Wandlereinrichtungen (D, 11) und ein optisches System (L, 51, 53, 55) aufweisen zur Projizierung eines Bildes des Objektes (SA) auf die photoelektrischen Wandlervorrichtungen.

7. Eine Vorrichtung nach Anspruch 6, wobei das optische System (L, 51, 53, 55) ein Paar von lichtempfangenden Elementfeldern (53, 55) aufweist, die vor und hinter einer Brennebene des optischen Objektivsystems (MS) angeordnet sind zur Bildung eines Objektbildes oder einer konjugierten Brennebene an Stellen separat hiervon um bestimmte Abstände in Richtung der optischen Achse, sowie Durchführungsvorrichtungen (58) zur Durchführungs einer arithmetischen Verarbeitung von Ausgangssignalen des Paars von lichtempfangenden Elementfeldern (53, 55) abhängig von bestimmten Ermittlungsfunktionen und zum Erkennen einer Fokusposition auf der Grundlage einer Differenz zwischen ermittelten Werten, welche durch die arithmetische Verarbeitung erhalten werden, wobei das Paar von lichtempfangenden Elementfeldern (53, 55) so angeordnet ist, daß die lichtempfangenden Oberflächen hiervon bezüglich der Brennebene oder der konjugierten Brennebene um einen bestimmten Winkel geneigt sind und wobei die optischen Pfadlängen von den lichtempfangenden Oberflächen, auf denen jeweils ein bestimmtes Bild ausgebildet wird, zu der Brennebene oder der konjugierten Brennebene einander gleich gesetzt werden.

8. Eine Vorrichtung nach Anspruch 7, wobei die Durchführungsvorrichtungen (58) Ausgangssignale von einem Paar von lichtempfangenden Bereichen, auf welchen identische Bilder gebildet werden, erzeugt, die als Paar von Bildinformationen verwendet werden und Ermittlungsfunktionen aus einer Mehrzahl von Paaren von Bildinformationen bildet, welche von Ausgangssignalen von einer Mehrzahl von lichtempfangenden Regionen erhalten werden, welche eine Mehrzahl von unterschiedlichen optischen Pfadlängen definieren.

9. Eine Vorrichtung nach Anspruch 8, wobei die Ermittlungsfunktionen durch Addieren der Ermittlungsfunktionen gebildet werden, die auf der Grundlage einer Mehrzahl von Videoinformationen berechnet wurden.

10. Eine Vorrichtung nach einem der Ansprüche 1 bis 9 mit dem optischen Objektivsystem (MS), wobei das optische Objektivsystem (MS) ein optisches System (72) zur Bildung eines komprimierten Bildes beinhaltet zum Komprimieren eines zweidimensionalen Bildes eines zu erzeugenden Probenbildes in einer Richtung senkrecht zur optischen Achse, wobei die Bildinformations-Erkennungsvorrichtungen einen Bildsensor (73) enthalten, der nahe einer Bildfokussierlinie angeordnet ist, welche durch das optische System (72) zur Bildung des komprimierten Bildes geformt wird, um die Bildfokussierlinie abzutasten und wobei Berechnungsvorrichtungen vorgesehen sind zur Erkennung einer Fokussierposition auf der Grundlage von Bildinformationen des Probenbildes, welches in einem Abtastsignalausgang von dem Bildsensor (73) enthalten ist.

11. Eine Vorrichtung nach einem der Ansprüche 1 bis 9 mit dem optischen Objektivsystem (MS), wobei das optische Objektivsystem (MS) ein optisches System (72) zur Bildung eines komprimierten Bildes beinhaltet zum Komprimieren eines zweidimensionalen Bildes eines zu erzeugenden Probenbildes in einer Richtung senkrecht zur optischen Achse, sowie ein optisches System (84) zur Bildung eines nichtkomprimierten Bildes zur Erzeugung eines zweidimensionalen Bildes des Probenbildes in der gleichen Bilderzeugungsposition wie in derjenigen des optischen Systems (72) zur Erzeugung eines komprimierten Bildes, wobei die Bildinformations-Erkennungsvorrichtungen einen Bildsensor zum Abtasten des von dem optischen System zur Erzeugung eines komprimierten Bildes erzeugten Bildes und des von dem optischen System zur Erzeugung eines nicht komprimierten Bildes erzeugten Bildes beinhalten und wobei eine arithmetische Arbeitseinrichtung (86) zur Erkennung einer Fokussierposition auf der Grundlage von Bildinformationen des Probenbildes in einem Abtastsignalausgang von dem Bildsensor (85) und Einrichtungen (87) zur Durchführung einer Fokussierpositionserkennung durch Schalten des optischen Systems (82) zur Erzeugung eines komprimierten Bildes und des optischen Systems (84) zur Erzeugung eines nicht komprimierten Bildes abhängig von den Zuständen des Probenbildes vorgesehen sind.

## Revendications

1. Appareil automatique de mise au point qui comprend :

   - des moyens d'entraînement (21-23) pour déplacer, l'un par rapport à l'autre dans la direction de l'axe optique (Z) du système optique formant objectif (MS), un objet (SA) à mettre au point et un système optique formant objectif (MS),
   - des moyens (11-17) de détection d'une information d'image pour détecter une information d'image de l'objet (SA) obtenue à l'aide du système optique formant objectif (MS),
   - un moyen formant mémoire (32) pour mémoriser au préalable des données qui définissent une pluralité de procédés différents de calcul de la position de mise au point, chaque procédé de calcul d'une position de mise au point devant être utilisé pour l'observation d'objets de types similaires,
   - un premier moyen d'initialisation (12) pour fournir une instruction indiquant aux moyens d'entraînement (21-23) le début d'une opération de balayage,
   - un moyen de démarrage (33) pour démarrer le fonctionnement dudit premier moyen d'initialisation une fois que l'utilisateur a détecté manuellement une position optimale de mise au point pour un objet choisi dans des objets de types similaires qui doivent être mis au point par un déplacement relatif entre l'objet sélectionné et le système optique formant objectif (MS), sachant que l'opération de balayage réalisée par lesdits moyens d'entraînement se fait par étapes sur une plage de mise au point prédéterminée qui contient la position optimale de mise au point définie par l'utilisateur,

- un moyen (12) d'appel de données initiales pour accéder à une pluralité de résultats obtenus en mettant en oeuvre la pluralité de différents procédés de calcul de la position de mise au point à l'aide des données mémorisées dans ledit moyen formant mémoire (32) et en fonction de l'information d'image relative à l'objet choisi qui est détectée par lesdits moyens de détection d'une information d'image pendant le balayage par lesdits moyens d'entraînement (21-23) en fonction de l'instruction fournie par ledit premier moyen d'initialisation (12),

- un second moyen d'initialisation (12) pour choisir un procédé optimal de calcul de la position de mise au point parmi la pluralité de procédés de calcul de la position de mise au point pour une opération de mise au point en fonction de la pluralité de résultats appelés par ledit moyen (12) d'appel des données initiales et de la position optimale de mise au point définie par l'utilisateur, et

- un moyen de commande (12) pour mettre en oeuvre le procédé optimal de calcul de la position de mise au point et pour détecter une position de mise au point qui correspond aux objets autres que l'objet choisi parmi des objets de types similaires, en commandant lesdits moyens d'entraînement (21-23) en fonction du résultat obtenu quand on met en oeuvre le procédé optimal de calcul de la position de mise au point.

2. Appareil selon la revendication 1, dans lequel des différences dans les données de la pluralité de différents procédés de calcul de la position de mise au point comprennent une pluralité de pas d'échantillonnage spatial pour l'information d'image dudit objet (SA).

3. Appareil selon la revendication 1, dans lequel les données de la pluralité de différents procédés de calcul de la position de mise au point comprennent des filtres (2) de fréquence spatiale et des procédés de calcul fondamental pour traiter l'information d'image après filtrage par les filtres de fréquence spatiale, et les différences dans les données de la pluralité de différents procédés de calcul de la position de mise au point comprennent les largeurs de bande des filtres (2) de fréquence spatiale.

4. Appareil selon la revendication 1, dans lequel les données de la pluralité de différents procédés de calcul de la position de mise au point comprennent des procédés de calcul fondamental et des procédés de correction qui corrigent les valeurs calculées par les procédés de calcul fondamental, et les différences dans les données de la pluralité de différents procédés de calcul de la position de mise au point comprennent les procédés de correction ou les valeurs de correction des procédés de correction.

5. Appareil automatique de mise au point selon l'une quelconque des précédentes revendications, comprenant en outre :

- un moyen pour effectuer une opération arithmétique d'après un procédé particulier de calcul de la position normalisée de mise au point quand une opération de détection de la position de mise au point est effectuée pour des objets de types différents, et

- un moyen pour choisir un procédé de calcul de la position de mise au point qui est optimum pour des objets de types similaires par actionnement desdits premier et second moyens d'initialisation quand les objets de types similaires sont détectés.

6. Appareil automatique de mise au point selon l'une quelconque des précédentes revendications, dans lequel lesdits moyens (11-17) de détection d'une information comprennent des moyens de conversion photo-électrique (D, 11) et un système optique (L, 51, 53, 55) pour projeter une image dudit objet (SA) sur lesdits moyens de conversion photo-électrique.

7. Appareil automatique de mise au point selon la revendication 6, dans lequel ledit système optique (L, 51, 53, 55) comprend une paire de réseaux (53, 55) d'éléments de réception de la lumière, disposés en avant et en arrière du plan focal dudit système optique formant objectif (MS) pour former une image d'un objet ou un plan focal conjugué en des positions espacées de celui-ci par des distances prédéterminées dans la direction de l'axe optique, et un moyen d'exécution (58) pour mettre en oeuvre le traitement arithmétique des signaux de sortie de ladite paire de réseaux (53, 55) d'éléments de réception de la lumière d'après des fonctions d'évaluation prédéterminées et pour détecter une position de mise au point sur la base d'une différence entre les valeurs d'évaluation obtenues par le traitement arithmétique, et dans lequel lesdits réseaux (53, 55) d'éléments de réception de la lumière de ladite paire sont disposés de telle sorte que leurs surfaces de réception de la lumière soient inclinées suivant des angles prédéterminés par rapport au plan focal ou au plan focal conjugué, et les longueurs des trajets optiques entre les surfaces de réception de la lumière, sur chacune desquelles est formée une image prédéterminée, et le plan focal ou le plan focal conjugué sont choisies pour être égales entre elles.

8. Appareil selon la revendication 7, dans lequel ledit moyen d'exécution (58) produit des signaux de sortie à partir d'une paire de régions de réception de la lumière où sont formées des images identiques, lesquelles sont utilisées comme une paire d'informations d'image, et forme des fonctions d'évaluation basées sur une pluralité de paires d'informations d'image obtenues par des signaux de sortie provenant d'une pluralité de régions de réception de la lumière qui définissent une pluralité de différentes longueurs de trajet optique.

9. Appareil selon la revendication 8, dans lequel les fonctions d'évaluation sont formées par addition des fonctions d'évaluation calculées sur la base d'une pluralité d'informations vidéo.

10. Appareil automatique de mise au point selon l'une quelconque des revendications 1 à 9 comprenant ledit système optique formant objectif (MS), dans lequel ledit système optique formant objectif (MS) comprend un système optique (72) de formation d'une image de compression pour comprimer une image en deux dimensions d'une image échantillon qui doit être formée dans une direction perpendiculaire à l'axe optique, et ledit moyen de détection d'une information d'image comprend un capteur d'image (73) disposé près d'une ligne de focalisation de l'image formée par ledit système optique (72) de formation d'une image de compression pour balayer la ligne de focalisation de l'image, et dans lequel est contenu un moyen de calcul pour détecter une position de mise au point sur la base de l'information d'image de l'image échantillon qui est contenue dans un signal de balayage émis par ledit capteur d'image (73).

11. Appareil automatique de mise au point selon l'une quelconque des revendications 1 à 9 comprenant ledit système optique formant objectif (MS), dans lequel ledit système optique formant objectif (MS) comprend un système optique (72) de formation d'une image de compression pour comprimer une image en deux dimensions d'une image échantillon qui doit être formée dans une direction perpendiculaire à l'axe optique et un système optique (84) de formation d'une image de non compression pour former une image en deux dimensions de l'image échantillon en la même position de formation d'image que celle dudit système optique (72) de formation d'une image de compression, et ledit moyen de détection d'une information d'image comprend un capteur d'image pour balayer l'image formée par ledit système optique de formation d'une image de compression et l'image formée par ledit système optique de formation d'une image de non compression, et dans lequel sont compris un moyen de calcul arithmétique (86) servant à détecter une position de mise au point sur la base d'une information d'image de l'image échantillon qui est contenue dans un signal de balayage émis par ledit capteur d'image (85) et un moyen (87) pour effectuer une détection de la position de mise au point par commutation dudit système optique (72) de formation d'une image de compression et dudit système optique (84) de formation d'une image de non compression en fonction des conditions de l'image échantillon.

F I G. 1

EP 0 451 865 B1

PLACE SAMPLE ON STAGE OF MICROSCOPE — S11

MANUALLY ADJUST STAGE TO OPTIMAL FOCUSING POSITION — S12

START INITIALIZATION — S13

SCAN STAGE WITHIN RANGE INCLUDING OPTIMAL FOCUSING POSITION — S14

CALCULATE AND STORE EVALUATION VALUE AT EACH POSITION AND SELECT OPTIMAL FOCUSING POSITION CALCULATION METHOD IN ACCORDANCE WITH EVALUATION CHARACTERISTICS — S15

F I G. 2

F I G.  3

FOCUSING POSITION

# F I G. 4

DEPTH OF FOCUS
OF OBJECT

FOCUSING POSITION

# F I G. 5

F I G. 6

SPATIAL
FREQUENCY

O          128          255

# F I G.   7

MAGNITUDE
OF  POWER
SPECTRUM

fa

fb

fc

Z

FOCUSING  POSITION

# F I G.   8

45

46

AUTOMATIC
FOCUSING
APPARATUS

IMAGE
PROCESSOR

47

COMPUTER

F I G. 9

VL

Z

FOCUSING POSITION

F I G. 10

$$\frac{dV_L}{dZ}$$

F I G. 11

F I G.   12A

F I G.   12B

F I G. 13

F I G. 14A

F I G. 14B

F I G. 15A

F I G. 15B

F I G. 15C

F I G. 16A

F I G. 16B

72
75    76
71
70
73

OPTICAL
AXIS

X

Y

LINE IMAGE
SENSOR
DRIVING
SIGNAL

LENS DRIVING
SIGNAL

ARITHMETIC
CONTROL
UNIT
(CPU)

74

# F I G.   17

70

Y

X

# F I G.   18

81

83

82

73

F I G.   19

OPTICAL
AXIS

87

LENS
DRIVING
SIGNAL

72

84

IMAGE FORMING
OPTICAL SYSTEM
SWITCHING
CIRCUIT

86

DATA
INPUT

C P U

LINE IMAGE
SENSOR DRIVING
SIGNAL

85

F I G. 20

F I G. 21

START

S21
CHANGE
IN OBSERVED
IMAGE ?

NO

YES

READ OBSERVED
IMAGE DATA

S22

SELECT IMAGE
FORMING OPTICAL
SYSTEM

S23

S24
CHANGE
IN OPTICAL
SYSTEM ?

NO

YES

SWITCH IMAGE
FORMING OPTICAL
SYSTEM

S25

OBTAIN SCANNING
SIGNAL AND
DETECT FOCUSING
POSITION

S26

END

F I G. 22

S1 — PERFORM FOCUSING OPERATION BY FIXED FOCUSING POSITION CALCULATION METHOD

S2 — OPTIMAL FOCUSING POSITION ?

NO

YES

S3 — OFFSET ADJUSTMENT OF FOCUSING POSITION

S4 — END INITIALIZATION

F I G.   23

FIG. 24A

FIG. 24B

FIG. 24C

F I G. 25A

F I G. 25B

EP 0 451 865 B1

FIG. 25C

FIG. 25D

OBSERVED IMAGE

91

92

F I G. 26

96

LINE IMAGE
SENSOR
DRIVER

93

94

OPTICAL
IMAGE

LINE IMAGE
SENSOR

LINE IMAGE
SENSOR
OUTPUT
PROCESSOR

C P U

(ARITHMETIC
CONTROL
UNIT )

97

95

LINE IMAGE
SENSOR
MOVING UNIT

LENS DRIVING
SIGNAL

F I G. 27